# EUROPEAN PATENT APPLICATION

(11) **EP 4 398 542 A1**
(43) Date of publication of application: **10.07.2024**
(21) Application number: 23791293.6
(22) Date of filing: 19.04.2023
(51) Int. Cl.: H04L 45/12

(54) **MESSAGE SENDING METHOD, NETWORK DEVICE AND COMMUNICATION SYSTEM**

(30) Priority: 22.04.2022 CN 202210430611
(71) Applicant: Huawei Technologies Co., Ltd., Shenzhen, Guangdong 518129 (CN)
(72) Inventor: ZHANG, Yongkang, Shenzhen, Guangdong 518129 (CN); HAO, Weiguo, Shenzhen, Guangdong 518129 (CN); HU, Zhibo, Shenzhen, Guangdong 518129 (CN); LI, Jun, Shenzhen, Guangdong 518129 (CN); WANG, Haibo, Shenzhen, Guangdong 518129 (CN); WEN, Huafeng, Shenzhen, Guangdong 518129 (CN)
(74) Representative: MERH-IP Matias Erny Reichl Hoffmann Patentanwälte PartG mbB
(86) International application number: PCT/CN2023/089304
(87) International publication number: WO 2023/202639

(57) **Abstract**

Embodiments of this application relate to the field of communication technologies, and in particular, to a packet sending method, a network device, and a communication system. The packet sending method includes: After determining to send a packet based on a non-shortest path and determining that a second network device and a first network device on the non-shortest path belong to different groups, the first network device may send the packet to the second network device, and notify the second network device to send the packet based on a shortest path. After receiving the packet, the second network device may send the packet based on the shortest path, and notify another network device on the shortest path to send the packet based on the shortest path. In this way, in a process of sending the packet, after the packet passes through an inter-group path in the non-shortest path, a remaining path is the shortest path for sending the packet to a destination device. In this way, a problem that there are excessive hops or there is a loop in a path for sending the packet can be avoided, and packet sending efficiency can be improved.

## Description

This application claims priority to Chinese Patent Application No. 202210430611.4, filed on April 22, 2022 and entitled "PACKET SENDING METHOD, NETWORK DEVICE, AND COMMUNICATION SYSTEM", which is incorporated herein by reference in its entirety.

### TECHNICAL FIELD

This application relates to the field of communication technologies, and in particular, to a packet sending method, a network device, and a communication system.

### BACKGROUND

A high performance computing cluster (High Performance Computing Cluster, HPCC) includes a large quantity of network devices and hosts (including computing devices or storage devices), and can be used to resolve complex computing problems in scientific research and industry. A plurality of network devices in the HPCC may form a high performance computing (High Performance Computing, HPC) network, and are configured to connect the hosts in the HPCC, to implement data transmission between the hosts. A dragonfly (dragonfly) network is a network topology type commonly used in the HPC network. In the dragonfly network, network devices may be divided into a plurality of groups, a full-mesh connection may be established between intra-group network devices, and at least one connection may be established between any two groups via network devices.

To improve packet sending efficiency, when sending a packet, each network device may determine, based on a destination address carried in the packet, a shortest path for sending the packet, and detect a congestion status of the shortest path. If congestion is detected on the shortest path, a non-shortest path may be selected to send the packet.

However, when there are a large quantity of packet sending tasks, congestion may occur on a large quantity of paths in the HPC network. In this case, in a process in which a network device sends a packet to a network device in another group, a problem that there are excessive hops or there is a loop in a path for sending the packet may exist, and consequently, packet sending efficiency of the network device is reduced.

### SUMMARY

Embodiments of this application provide a packet sending method, a network device, and a communication system, to improve packet sending efficiency of a network device in an HPC network. Corresponding technical solutions are as follows.

According to a first aspect, a packet sending method is provided. The method includes: A first network device obtains a non-shortest path for sending a packet, where the non-shortest path includes at least two inter-group paths, and a second network device and the first network device on the non-shortest path belong to different groups; and the first network device sends the packet to the second network device, and notifies the second network device to send the packet based on a shortest path, where the non-shortest path includes the shortest path, and the shortest path includes one inter-group path.

The inter-group path is a link for transmitting data between two network devices that are connected and in different groups, and an intra-group path is a link for transmitting data between two network devices that are connected and in a same group. The shortest path is a part of the non-shortest path.

In the solution shown in this application, the packet sent by the first network device to the second network device may be sent by a host connected to the first network device to the first network device. When the packet is sent by the host connected to the first network device to the first network device, the first network device may determine congestion statuses of the shortest path and the non-shortest path for sending the packet. There may be a plurality of shortest paths and a plurality of non-shortest paths for sending the packet by the first network device. If the first network device determines that all shortest paths for sending the packet are congested, the first network device may select a non-congested shortest path to send the packet. When the first network device sends the packet to a second network device in another group based on the non-shortest path, the first network device may notify the second network device to send the packet to a destination device based on the shortest path.

In other words, in this application, when a network device sends the packet based on the non-shortest path, if it is determined that the network device and a network device that receives the packet belong to different groups, the network device may notify the network device that receives the packet to send the packet based on the shortest path. Therefore, after the packet is sent through an inter-group path once on the non-shortest path, a network terminal that subsequently receives the packet sends the packet based on the shortest path. In addition, because the shortest path includes only one inter-group path, in a process of sending a packet based on the non-shortest path, the packet needs to pass through only two inter-group paths, and is sent to the destination device. Therefore, a problem that there are excessive hops of the network device or there is a loop in a path for sending the packet can be avoided, and packet sending efficiency can be improved to some extent.

In a possible implementation, that the first network device sends the packet to the second network device, and notifies the second network device to send the packet based on a shortest path includes: The first network device sets shortest path information in the packet, where the shortest path information indicates the second network device to send, based on the shortest path, the packet in which the shortest path information is set; and the first network device sends, to the second network device, the packet in which the shortest path information is set.

In the solution shown in this application, the first network device may set the shortest path information in the packet, to notify the second network device to send the packet based on the shortest path. For example, the shortest path information may be set in the packet by setting a field value of an extension field. In this way, the second network device may determine, based on whether the shortest path information is set in the received packet, whether to send the received packet based on the shortest path. In this way, the shortest path information is set in the packet to notify the second network device to send the packet based on the shortest path, so that sending an additional notification to the second network device can be prevented, an amount of data transmitted between network devices in an HPC network is reduced, and efficiency of packet sending between the network devices can be improved.

In a possible implementation, the shortest path information is set in an internet protocol (Internet Protocol, IP) header or a tunnel header in the packet. For example, the shortest path information may be set in an extension field of the IP header or the tunnel header in the packet. In this way, the shortest path information may be set in the packet without changing a packet format. A setting manner is simple, and the packet sending efficiency of the network device can be improved.

In a possible implementation, that a first network device obtains a non-shortest path for sending a packet includes: The first network device obtains, based on non-shortest path information set in the packet, the non-shortest path for sending the packet.

In the solution shown in this application, the packet sent by the first network device to the second network device may be sent by another network device in a same group to the first network device. If the another network device in the same group sends the packet to the first network device based on the non-shortest path, the non-shortest path information may be set in the packet. For example, the non-shortest path information may be set in the packet by setting a field value of an extension field in the packet. The extension field and the extension field corresponding to the shortest path information may be a same field, but correspond to different field values. In this way, the first network device may determine, based on whether the non-shortest path information is set in the received packet, whether to send the received packet based on the non-shortest path. In this way, the non-shortest path information is set in the packet to notify the first network device to send the packet based on the non-shortest path, so that sending an additional notification to the first network device can be prevented, the amount of data transmitted between the network devices in the HPC network is reduced, and the efficiency of packet sending between the network devices can be improved.

In a possible implementation, the non-shortest path information is set in the internet protocol IP header or the tunnel header in the packet. For example, the non-shortest path information may be set in the extension field of the IP header or the tunnel header in the packet. In this way, the non-shortest path information may be set in the packet without changing the packet format. A setting manner is simple, and the packet sending efficiency of the network device can be improved.

In a possible implementation, that the first network device sends the packet to the second network device, and notifies the second network device to send the packet based on a shortest path includes: The first network device sends the packet to the second network device through a first interface corresponding to the shortest path, to indicate the second network device to send the packet based on the shortest path.

In the solution shown in this application, when establishing a connection to another network device, a network device may establish the connection to the another network device through at least two interfaces. One interface may send or receive only a packet on a shortest path, and the other interface may send or receive only a packet on a non-shortest path. In this way, the network device may determine, based on the interface for receiving the packet, whether to send the packet based on the shortest path or the non-shortest path. When the first network device sends the packet to the second network device through the first interface corresponding to the shortest path, the second network device may receive the packet through the interface corresponding to the shortest path, to indicate the second network device to send the packet based on the shortest path. In this way, the network device may indicate, only by sending the packet through different interfaces, a path that should be selected when a network device that receives the packet sends the packet, and does not need to send an additional notification to the first network device, so that the amount of data transmitted between the network devices in the HPC network can be reduced, and the efficiency of packet sending between the network devices can be improved.

In a possible implementation, that a first network device obtains a non-shortest path for sending a packet includes: The first network device receives the packet through a second interface corresponding to the non-shortest path, and determines the non-shortest path for sending the packet.

In the solution shown in this application, the packet sent by the first network device to the second network device may be sent by another network device in a same group to the first network device. In addition, the another network device may send the packet to the second interface that is in the first network device and that corresponds to the non-shortest path. In this way, when receiving the packet through the second interface, the first network device may determine to send the received packet based on the non-shortest path without decapsulating the packet or receiving an additional notification, so that the packet sending efficiency of the network device is improved.

In a possible implementation, a shortest-path forwarding table and a non-shortest-path forwarding table are set in the first network device. The first interface of the first network device is bound to the shortest-path forwarding table, to send or receive a packet on the shortest path. The second interface of the first network device is bound to the non-shortest-path forwarding table, to send or receive a packet on the non-shortest path.

The shortest-path forwarding table includes a next-hop address for sending a packet to each host in the HPC network based on the shortest path, where the next-hop address may be an interface address of an interface on the shortest path corresponding to a next-hop device; and the non-shortest-path forwarding table includes a next-hop address for sending a packet to each host in the HPC network based on the non-shortest path, where the next-hop address may be an interface address of an interface on the non-shortest path corresponding to a next-hop device. In the solution shown in this application, different interfaces are separately bound to the shortest-path forwarding table and the non-shortest-path forwarding table, so that different interfaces correspond to different paths, and the shortest-path forwarding table corresponding to the shortest path and the non-shortest-path forwarding table corresponding to the non-shortest path are separately stored. This improves table query efficiency.

In a possible implementation, the second network device is a next-hop device of the first network device on the non-shortest path.

In a possible implementation, the second network device is not a next-hop device of the first network device on the non-shortest path. The first network device sends the packet to the second network device via a third network device, where the third network device and the first network device belong to a same group, and the third network device is on the non-shortest path.

In the solution shown in this application, the second network device is on a non-shortest path for the first network device to send a packet to the destination device, but is not the next-hop device corresponding to the first network device on the non-shortest path. The next-hop device corresponding to the first network device on the non-shortest path may be the third network device that belongs to a same group as the first network device. In this case, when sending the packet to the third network device, the first network device may notify the third network device to send the packet based on the non-shortest path, and then the third network device sends the packet to the second network device based on the non-shortest path. In this way, the packet is always sent in a same group based on the non-shortest path, so that a problem that there are excessive hops or there is a loop in a path for sending the packet in the group can be avoided.

In a possible implementation, that the first network device sends the packet to the third network device, and notifies the third network device to send the packet based on the non-shortest path includes: The first network device sets the non-shortest path information in the packet, where the non-shortest path information indicates the third network device to send, based on the non-shortest path, the packet in which the shortest path information is set; and the first network device sends, to the third network device, the packet in which the non-shortest path information is set.

In the solution shown in this application, a manner in which the first network device notifies the third network device to send the packet based on the non-shortest path may be setting the non-shortest path information in the sent packet. For example, the non-shortest path information may be set in the packet by setting a value of an extension field in the packet. In this way, the third network device may determine, based on whether the non-shortest path information is set in the received packet, whether to send the received packet based on the non-shortest path. In this way, the non-shortest path information is set in the packet to notify the third network device to send the packet based on the non-shortest path, so that sending an additional notification to the third network device can be prevented, the amount of data transmitted between the network devices in the HPC network is reduced, and the efficiency of packet sending between the network devices can be improved.

In a possible implementation, before a first network device obtains a non-shortest path for sending a packet, the method further includes: The first network device receives a route advertisement message sent by the second network device, where the route advertisement message includes an address of the destination device of the packet, a path cost value from the first network device to the destination device via the second network device, and a next-hop address for sending the packet by the first network device to the destination device; and the first network device determines, based on the path cost value, that a path from the first network device to the destination device is the non-shortest path.

In the solution shown in this application, before the network devices in the HPC network send packets, the network devices may send route advertisement messages to each other. Each network device may establish a local routing table based on the received route advertisement message, and then generate a corresponding forwarding table based on the routing table. The first network device may receive the route advertisement message sent by the second network device, where the route advertisement message may include the address of the destination device corresponding to the packet, the path cost value corresponding to the path through which the first network device sends the packet to the destination device via the second network device, and the next-hop address for sending the packet by the first network device to the destination device. The next-hop address is an address of the second network device, for example, may be an interface address corresponding to an interface that is connected to the second network device and that is of the first network device.

After receiving the route advertisement message, the first network device may determine, based on the path cost value in the route advertisement message, whether the path corresponding to the route advertisement message is the shortest path or the non-shortest path. A path cost threshold may be set in the first network device. For a route advertisement message whose path cost value is greater than the path cost threshold, it may be considered that a path corresponding to the route advertisement message is the non-shortest path; and for a route advertisement message whose path cost value is less than or equal to the path cost threshold, it may be considered that a path corresponding to the route advertisement message is the shortest path.

In a possible implementation, a path cost value of the inter-group path is greater than a sum of path cost values of all intra-group paths in a same group.

In the solution shown in this application, the shortest path and the non-shortest path may include the inter-group path and the intra-group path. The path cost value of the inter-group path is set to be greater than the sum of the path cost values of all the intra-group paths in a same group. In this way, a quantity of inter-group paths and intra-group paths included in the shortest path or the non-shortest path can be calculated only by using the path cost value.

In a possible implementation, the first network device obtains the shortest path for sending the packet, where the non-shortest path includes one inter-group path; and the first network device sends the packet to a fifth network device, and notifies the fifth network device to send the packet based on the shortest path, where the fifth network device is a network device on the shortest path.

In the solution shown in this application, the packet sent by the first network device to the fifth network device may be sent by the host connected to the first network device to the first network device. When the packet is sent by the host connected to the first network device to the first network device, the first network device may determine congestion statuses of the shortest path and the non-shortest path for sending the packet. There may be a plurality of shortest paths and a plurality of non-shortest paths for sending the packet by the first network device. If the first network device determines that a non-congested shortest path exists in the shortest paths for sending the packet, the first network device may select a non-congested shortest path to send the packet.

When the first network device sends the packet to the fifth network device based on the shortest path, the first network device may notify the fifth network device to send the packet to the destination device based on the shortest path. In other words, in this application, provided that the network device determines to send the packet based on the shortest path, a network device that subsequently receives the packet may always send the packet based on the shortest path. Therefore, the problem that there are excessive hops of the network device or there is the loop in the path for sending the packet can be avoided, and the packet sending efficiency can be improved to some extent.

In a possible implementation, the packet sending method is applied to a dragonfly network or a dragonfly+ network.

According to a second aspect, a packet sending method is provided. The method includes: A second network device receives a packet sent by a first network device based on a non-shortest path; the second network device determines to send the packet based on a notification of the first network device and a shortest path, where the non-shortest path includes at least two inter-group paths, the second network device and the first network device belong to different groups, the non-shortest path includes the shortest path, and the shortest path includes one inter-group path; and the second network device sends the packet based on the notification and the shortest path.

The inter-group path is a link for transmitting data between two network devices that are connected and in different groups, and an intra-group path is a link for transmitting data between two network devices that are connected and in a same group. The shortest path is a part of the non-shortest path.

In the solution shown in this application, in a process of sending the packet based on the non-shortest path, the second network device may receive the notification sent by the first network device, and determine to send the packet based on the shortest path. In other words, after the packet is sent through the inter-group path once on the non-shortest path, a network terminal that subsequently receives the packet sends the packet based on the shortest path. In addition, because the shortest path includes one inter-group path, in the process of sending the packet based on the non-shortest path, the packet needs to pass through only two inter-group paths. Therefore, a problem that there are excessive hops of the network device or there is a loop in a path for sending the packet can be avoided, and packet sending efficiency can be improved to some extent.

In a possible implementation, that the second network device determines to send the packet based on a notification of the first network device and a shortest path includes: The second network device determines, based on shortest path information set in the packet, to send the packet based on the shortest path, where the shortest path information indicates the second network device to send the packet based on the shortest path.

In the solution shown in this application, the shortest path information may be set in the packet, and the second network device may determine, based on whether the shortest path information is set in the packet, whether to send the received packet based on the shortest path. In this way, the non-shortest path information is set in the packet to notify the second network device to send the packet based on the non-shortest path, so that sending an additional notification to the second network device can be prevented, an amount of data transmitted between network devices in an HPC network is reduced, and efficiency of packet sending between the network devices can be improved.

In a possible implementation, the shortest path information is set in an internet protocol IP header or a tunnel header in the packet. For example, the shortest path information may be set in an extension field of the IP header or the tunnel header in the packet. In this way, the non-shortest path information may be set in the packet without changing a packet format. A setting manner is simple, and the packet sending efficiency of the network device can be improved.

In a possible implementation, that the second network device determines to send the packet based on a notification of the first network device and a shortest path includes: The second network device receives, through a first interface corresponding to the shortest path, the packet sent by the first network device, and determines to send the packet based on the shortest path.

In the solution shown in this application, when establishing a connection to another network device, a network device may establish the connection to the another network device through at least two interfaces. One interface may send or receive only a packet on a shortest path, and the other interface may send or receive only a packet on a non-shortest path. In this way, the network device may determine, based on the interface for receiving the packet, whether to send the packet based on the shortest path or the non-shortest path. In this way, when receiving the packet through the first interface corresponding to the shortest path, the second network device may determine to send the received packet based on the non-shortest path without decapsulating the packet or receiving the additional notification, so that the packet sending efficiency of the network device is improved.

In a possible implementation, the second network device is a next-hop device of the first network device on the non-shortest path.

In a possible implementation, that the second network device determines to send the packet based on a notification of the first network device and a shortest path includes: The second network device determines, based on a notification that is sent by a third network device and that is about sending the packet based on the shortest path, to send the packet based on the shortest path, where the third network device and the first network device belong to a same group, and the third network device is on the non-shortest path.

In the solution shown in this application, the second network device is on a non-shortest path for the first network device to send a packet to a destination device, but is not the next-hop device corresponding to the first network device on the non-shortest path. The next-hop device corresponding to the first network device on the non-shortest path may be the third network device that belongs to a same group as the first network device. In this case, when sending the packet to the third network device, the first network device may notify the third network device to send the packet based on the non-shortest path, and then the third network device sends the packet to the second network device on the non-shortest path, and notifies the second network device to send the packet based on the shortest path. In this way, a network device in the first group always sends a packet based on the non-shortest path. After the packet is sent through the inter-group path, a network device that subsequently receives the packet may send the packet based on the shortest path, to avoid the problem that there are excessive hops of the network device or there is the loop in the path for sending the packet, and the packet sending efficiency can be improved to some extent.

In a possible implementation, before a second network device receives a packet sent by a first network device based on a non-shortest path, the method further includes: The second network device receives a route advertisement message sent by a fourth network device, where the route advertisement message includes an address of the destination device of the packet, a path cost value from the second network device to the destination device via the fourth network device, and a next-hop address for sending the packet by the second network device to the destination device; and the second network device determines, based on the path cost value, that a path from the second network device to the destination device is the shortest path.

In the solution shown in this application, before the network devices in the HPC network send packets, routing information may be propagated between the network devices. Each network device may establish a local routing table based on a received route advertisement message, and then generate a corresponding forwarding table based on the routing table. The second network device may receive the route advertisement message sent by the fourth network device, where the route advertisement message may include the address of the destination device corresponding to the packet, the path cost value corresponding to the path through which the second network device sends the packet to the destination device via the fourth network device, and the next-hop address for sending the packet by the second network device to the destination device. The next-hop address is an address of the fourth network device, for example, may be an interface address corresponding to an interface that is connected to the fourth network device and that is of the second network device.

After receiving the route advertisement message, the second network device may determine, based on the path cost value in the route advertisement message, whether the path corresponding to the route advertisement message is the shortest path or the non-shortest path. A path cost threshold may be set in the second network device. For a route advertisement message whose path cost value is greater than the path cost threshold, it may be considered that a path corresponding to the route advertisement message is the non-shortest path; and for a route advertisement message whose path cost value is less than or equal to the path cost threshold, it may be considered that a path corresponding to the route advertisement message is the shortest path.

In a possible implementation, a path cost value of the inter-group path is greater than a sum of path cost values of all intra-group paths in a same group.

In the solution shown in this application, the shortest path and the non-shortest path may include the inter-group path and the intra-group path. The path cost value of the inter-group path is set to be greater than the sum of the path cost values of all the intra-group paths in a same group. In this way, a quantity of inter-group paths and intra-group paths included in the shortest path or the non-shortest path can be calculated only by using the path cost value.

In a possible implementation, the packet sending method is applied to a dragonfly network or a dragonfly+ network.

According to a third aspect, a first network device is provided. The first network device includes one or more modules, and the one or more modules are configured to implement the packet sending method provided in any one of the first aspect or the optional manners of the first aspect.

According to a fourth aspect, a second network device is provided. The second network device includes one or more modules, and the one or more modules are configured to implement the packet sending method provided in any one of the second aspect or the optional manners of the second aspect.

According to a fifth aspect, a network device is provided. The network device includes a memory and a processor. The memory is configured to store computer instructions, and the processor is configured to execute the computer instructions stored in the memory, so that the network device performs and implements the packet sending method provided in the first aspect, the second aspect, any one of the optional manners of the first aspect, or any one of the optional manners of the second aspect.

According to a sixth aspect, a communication system is provided. The communication system includes a first network device and a second network device. The first network device is configured to implement the packet sending method provided in any one of the first aspect or the optional manners of the first aspect. The second network device is configured to implement the packet sending method provided in any one of the second aspect or the optional manners of the second aspect.

According to a seventh aspect, a readable storage medium is provided. The readable storage medium stores program code. When the program code is executed by a network device, the network device performs and implements the packet sending method provided in the first aspect, the second aspect, any one of the optional manners of the first aspect, or any one of the optional manners of the second aspect.

According to an eighth aspect, a computer program product is provided. The computer program product includes at least one computer instruction, and when the computer program product runs on a model inference device, the device is enabled to implement the packet sending method provided in the first aspect, the second aspect, any one of the optional manners of the first aspect, or any one of the optional manners of the second aspect.

### BRIEF DESCRIPTION OF DRAWINGS

FIG. 1 is a schematic diagram of a structure of a dragonfly network according to an embodiment of this application;
FIG. 2 is a schematic diagram of a structure of a dragonfly+ network according to an embodiment of this application;
FIG. 3 is a schematic diagram of a structure of an HPC network according to an embodiment of this application;
FIG. 4 is a flowchart of a packet sending method according to an embodiment of this application;
FIG. 5 is a schematic diagram of an FIB according to an embodiment of this application;
FIG. 6 is a flowchart of a packet sending method according to an embodiment of this application;
FIG. 7 is a flowchart of a packet sending method according to an embodiment of this application;
FIG. 8 is a schematic diagram of an interface of a network device according to an embodiment of this application;
FIG. 9 is a flowchart of a packet sending method according to an embodiment of this application;
FIG. 10 is a flowchart of a route establishment method according to an embodiment of this application;
FIG. 11 is a schematic diagram of a structure of an HPC network according to an embodiment of this application;
FIG. 12 is a schematic diagram of an interface of a network device according to an embodiment of this application;
FIG. 13 is a schematic diagram of an interface of a network device according to an embodiment of this application;
FIG. 14 is a schematic diagram of an encapsulation format of a VXLAN packet according to an embodiment of this application;
FIG. 15 is a flowchart of a packet sending method according to an embodiment of this application;
FIG. 16 is a flowchart of a packet sending method according to an embodiment of this application;
FIG. 17 is a schematic diagram of a structure of a first network device according to an embodiment of this application;
FIG. 18 is a schematic diagram of a structure of a second network device according to an embodiment of this application; and
FIG. 19 is a schematic diagram of a structure of a network device according to an embodiment of this application.

### DESCRIPTION OF EMBODIMENTS

To make the objectives, technical solutions, and advantages of this application clearer, the following further describes the implementations of this application in detail with reference to the accompanying drawings.

Embodiments of this application provide a packet sending method. The method may be applied to an HPC network. Network devices in the HPC network may form various types of topology networks, for example, a dragonfly (dragonfly) network and a dragonfly + (dragonfly+) network.

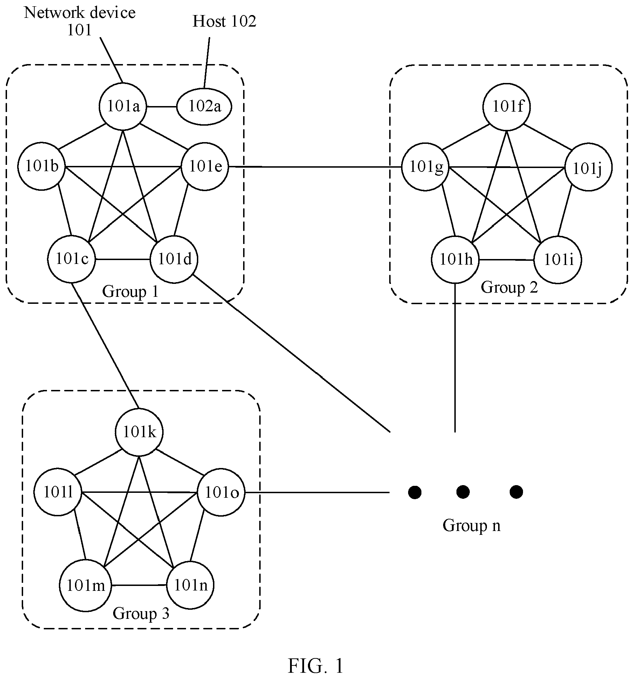

FIG. 1 is an example of a dragonfly network. As shown in FIG. 1, the dragonfly network includes a plurality of groups (groups) that are fully interconnected, and each group includes a plurality of network devices 101 (routers, switches, or the like). A full-mesh connection may be established between the plurality of network devices 101. Each network device 101 may be connected to one or more hosts 102 (computing devices or storage devices). FIG. 1 shows an example of a host 102.

In FIG. 1, a group 1 includes a network device 101a, a network device 101b, a network device 101c, a network device 101d, and a network device 101e. The network device 101a is connected to the host 102a. A group 2 includes a network device 101f, a network device 101g, a network device 101h, a network device 101i, and a network device 101j. The network device 101g in the group 2 may establish a connection to the network device 101e in the group 1. A group 3 includes a network device 101k, a network device 1011, a network device 101m, a network device 101n, and a network device 101o. The network device 101k in the group 3 may establish a connection to the network device 101c in the group 1. In addition, another network device in the group 1, the group 2, and the group 3 may further establish a connection (not shown in FIG. 1) to a network device in another group. For example, the network device 101d, the network device 101o, and the network device 101h may separately establish a connection to a network device in the another group.

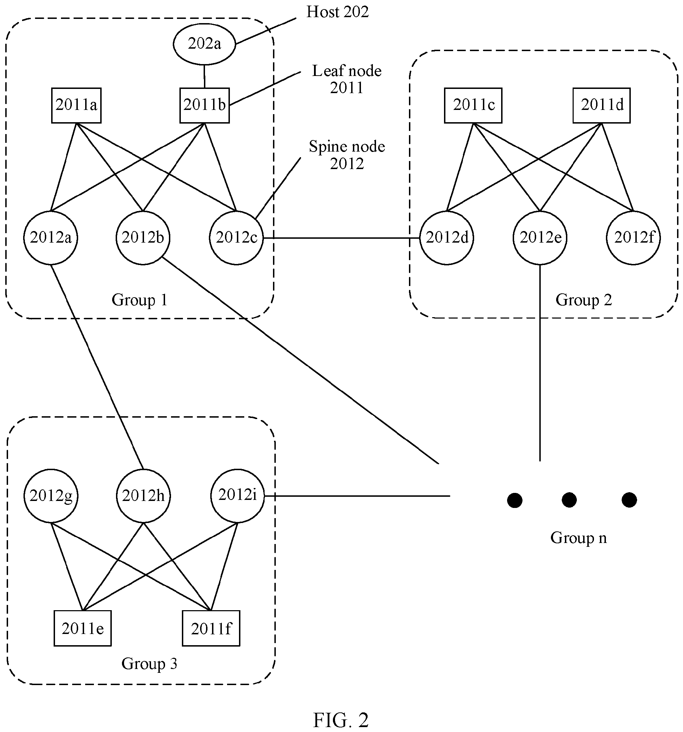

FIG. 2 is an example of a dragonfly+ network. As shown in FIG. 2, the dragonfly+ network includes a plurality of groups that are fully interconnected, and each group includes a plurality of network devices 201 (routers, switches, or the like). A leaf-spine topology network may be established among a plurality of network devices 101. In the leaf-spine topology network, the network devices 201 may be classified into leaf nodes (leaf) 2011 and spine nodes (spine) 2012. The leaf node may separately establish connections to a host 202 and the spine node 2012. FIG. 2 shows an example of a host 202, and the spine node 2012 may establish a connection to a spine node in another group.

In FIG. 2, in a group 1, the leaf node 2011 may include a network device 2011a and a network device 2011b, and the spine node may include a network device 2012a, a network device 2012b, and a network device 2012c. The network device 2011a and the network device 2011b establish connections to the network device 2012a, the network device 2012b, and the network device 2012c separately, and the network device 2011b is connected to a host 202a. In a group 2, the leaf node 2011 may include a network device 2011c and a network device 2011d, and the spine node may include a network device 2012d, a network device 2012e, and a network device 2012f. The network device 2011c and the network device 2011d separately establish connections to the network device 2012d, the network device 2012e, and the network device 2012f. The network device 2012d in the group 2 establishes a connection to the network device 2012c in the group 1. In a group 3, the leaf node 2011 may include a network device 2011e and a network device 2011f, and the spine node may include a network device 2012i, a network device 2012g, and a network device 2012h. The network device 2011e and the network device 2011f separately establish connections to the network device 2012g, the network device 2012h, and the network device 2012i. The network device 2012h in the group 3 establishes a connection to the network device 2012a in the group 1. In addition, another spine node in the group 1, the group 2, and the group 3 may further establish a connection (not shown in FIG. 2) to a spine node in another group. For example, the network device 2012b, the network device 2021d, and the network device 2021i may separately establish a connection to a spine node in the another group.

**The following describes some terms that may be used in this application.**

**Link:** A data transmission line between two interconnected network devices or between a network device and a host that are interconnected is referred to as a link.

If the two interconnected network devices belong to a same group, the link between the two network devices is an intra-group link (local link). If the two interconnected network devices do not belong to a same group, the link between the two network devices is an inter-group link (global link). If the network device and the host are interconnected, the link between the network device and the host is an ingress link (access link).

**Path:** A data transmission line between any two nodes (network devices or hosts) is referred to as a path, and one path may include one or more links.

**Shortest path:** The shortest path is a path that includes only one inter-group link in at least one included link.

**Non-shortest path:** The non-shortest path is a path that includes two or more inter-group links in at least one included link.

**Link cost value:** Based on characteristics of an HPC network, different types of links correspond to different link cost values. A link cost value of the inter-group link is greater than a link cost value of the intra-group link. Generally, a link cost value corresponding to the ingress link is less than the link cost value corresponding to the intra-group link, and the link cost value corresponding to the intra-group link is less than the link cost value corresponding to the inter-group link.

**Path cost value:** A path cost value corresponding to a path is a sum of link cost values corresponding to links included in the path. If a path includes only one link, a path cost value corresponding to the path is a link cost value corresponding to the link included in the path.

A skilled person may preset a cost threshold, and distinguish the shortest path from the non-shortest path based on the cost threshold.

**Border gateway protocol** (Border Gateway Protocol, BGP): The border gateway protocol is a routing protocol between autonomous systems (autonomous systems, ASs), and can be used in the ASs or between the ASs.

**AS:** The AS is a small unit that has the right to autonomously decide which routing protocol should be used in the system.

**Virtual extensible local area network** (Virtual Extensible Local Area Network, VXLAN): The virtual extensible local area network is a network virtualization technology, and is essentially a tunneling technology. In the technology, a network is logically divided into an underlay network (infrastructure network) and an overlay network (service network).

**For ease of understanding embodiments provided in this application, the following briefly describes an existing packet sending method.**

When a host in an HPC network sends a packet to a destination host in another group, the host may first send the packet to a network device in the HPC network. After receiving the packet, the network device may determine, based on a destination address carried in the packet, a shortest path and a non-shortest path for sending the packet to the corresponding destination host, then select a corresponding path based on congestion statuses of the shortest path and the non-shortest path, and send the packet to a connected network device (which may be referred to as a next-hop device subsequently) on the selected path. After receiving the packet, the next-hop device may continue to determine a shortest path and a non-shortest path for sending the packet to the corresponding destination host, then select a corresponding path based on congestion statuses of the shortest path and the non-shortest path, and send the packet to a next-hop device corresponding to the next-hop device until the packet is sent to the destination host.

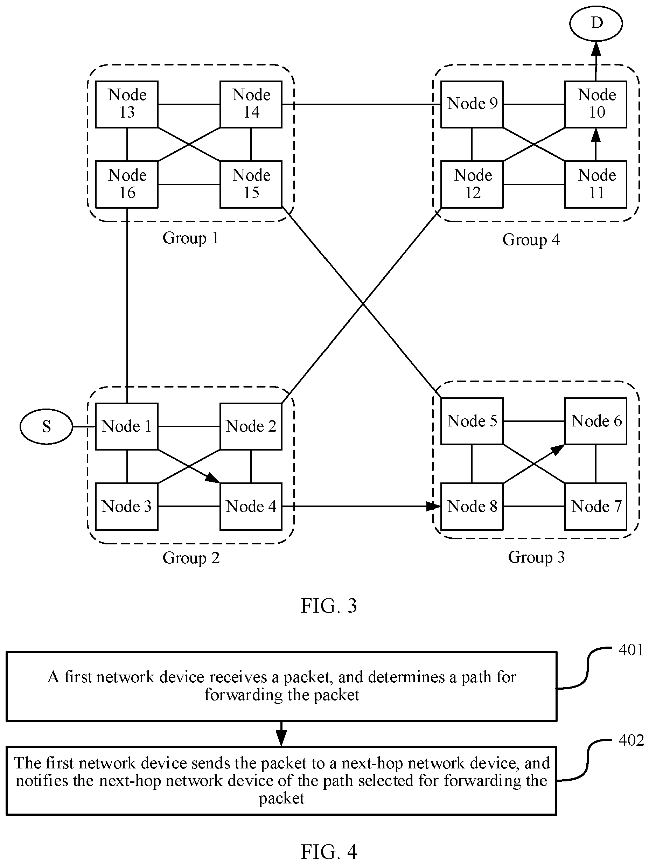

However, because each network device that forwards the packet reselects a path for sending the packet, there may be a plurality of hops in the path for sending the packet. For example, the path for sending the packet passes through a plurality of network devices that belong to different groups. As shown in FIG. 3, a sending path from a host S to a host D may be host S-node 1-node 4-node 8-node 6-node 5-node 15-node 13-node 14-node 9-node 10-host D. Alternatively, there may be a loop in the path for sending a packet, especially in a plurality of different groups. As shown in FIG. 3, a sending path from the host S to the host D may be host S-node 1-node 4-node 8-node 5-node 15-node 16-node 1-node 4-...-host D. Consequently, packet sending efficiency in the HPC network is low.

Embodiments of this application provide a packet sending method on a forwarding plane. A network device may send a packet based on a shortest path or a non-shortest path, so that packet forwarding efficiency can be improved. Optionally, a route establishment method is provided on a control plane, to determine a shortest path and a non-shortest path for sending a packet between nodes (network devices or hosts).

FIG. 4 shows a packet sending method according to an embodiment of this application. The following describes in detail a processing procedure shown in FIG. 4 with reference to a specific implementation. Content is as follows.

Step 401: A first network device receives a packet, and determines a path for forwarding the packet.

The packet received by the first network device may be sent by a host connected to the first network device, or may be sent by another network device connected to the first network device.

When the packet received by the first network device is sent by the another network device connected to the first network device, the path for forwarding the packet may be determined based on a notification of the another network device. When the packet received by the first network device is sent by the host connected to the first network device, the first network device may perform an adaptive routing (adaptive routing) algorithm to determine the path for forwarding the packet. Details are as follows.

The first network device obtains a destination address in the received packet, where the packet may be an IP packet, and the destination address is an IP address corresponding to a destination host. In a possible case, the IP address is a network segment route corresponding to a target host. Then, the first network device may query a local forwarding information table (Forwarding Information Base, FIB) to determine a shortest path and a non-shortest path for sending the packet, for example, may determine a next-hop address on the shortest path for sending the packet and a next-hop address on the non-shortest path for sending the packet.

After determining, in the FIB (namely, the forwarding table) based on the destination address carried in the packet, the next-hop address for sending the packet and a path type corresponding to each next-hop address, the first network device may detect a congestion status of a network device corresponding to each next-hop address. If a network device to which the next-hop address corresponding to the shortest path belongs is not congested, it may be determined that the packet is sent based on the shortest path; or if all network devices to which the next-hop address corresponding to the shortest path type belongs are congested, and a network device to which the next-hop address corresponding to the non-shortest path belongs is not congested, it may be determined that the packet is sent based on the non-shortest path. The detection of the congestion status of the network device may be determined based on whether an adaptive routing notification (Adaptive Routing Notification, ARN) sent by the corresponding network device is received. If the first network device receives an ARN sent by a network device, the first network device may determine that the network device is congested, and it indicates that a shortest path or a non-shortest path corresponding to the network device is congested.

The FIB is generated by the first network device based on a routing table in the first network device, and the routing table may be obtained by the first network device through processing on a control plane. Details are not described herein. The FIB includes an IP address prefix (IP Prefix), a next-hop address corresponding to the IP prefix, and a path type corresponding to the next-hop address. IP prefixes are destination addresses corresponding to different hosts. The next-hop address corresponding to the IP prefix is an address of a next-hop device of a network device that stores the FIB and that sends a packet to a corresponding destination address. Table 1 shows an example of the FIB.

**Table 1**

| IP prefix | Next-hop address | Path type |
|---|---|---|
| IP prefix 1 | Next-hop address 1 | Non-min |
| IP prefix 2 | Next-hop address 2 | Min |
| IP prefix 3 | Next-hop address 3 | Non-min |
| IP prefix 4 | Next-hop address 4 | Min |
| IP prefix n | Next-hop address 5 | Min |

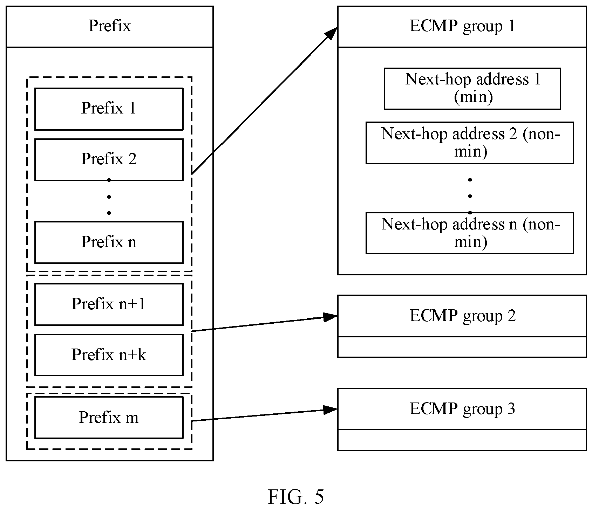

In a possible case, next-hop (next-hop) addresses corresponding to a plurality of specified IP prefixes may be organized into a same equal-cost route (Equal-CostMultipathRouting, ECMP) group, and a path type corresponding to each next-hop address is set. FIG. 5 is a schematic diagram of an FIB. As shown in FIG. 5, a prefix 1 to a prefix n correspond to next-hop addresses in an ECMP group 1, a prefix 1 n+1 to a prefix n+k correspond to next-hop addresses in an ECMP group 2, and a prefix m corresponds to a next-hop address in an ECMP group 3. A corresponding path type may be set for each next-hop address in each ECMP group, where min is a shortest path type, non-min is a non-shortest path type, a next-hop address corresponding to non-min is a next-hop address on a non-shortest path, and a next-hop address corresponding to min is a next-hop address on a shortest path.

Step 402: The first network device sends the packet to a next-hop device, and notifies the next-hop device of the path selected for forwarding the packet.

In this application, when receiving a packet sent by a connected host, the network device may perform the adaptive routing algorithm, to be specific, may select a path type corresponding to a path for sending the packet. Then, when sending the packet to another network device, each network device may notify a next-hop device of the path type corresponding to the path for sending the packet.

When notifying the next-hop device of the path type corresponding to the path for sending the packet, the network device may comply with the following sending rule: If the next-hop device and the network device belong to a same group, the network device notifies the next-hop device to select a path of a path type the same as that selected by the network device to forward the packet; or if the next-hop device and the network device do not belong to a same group, the network device notifies the next-hop device to select a path of the shortest path type to forward the packet. It can be learned from the sending rule that, in this application, when the network device sends the packet based on a non-shortest path, if it is determined that the network device and a network device that receives the packet belong to different groups, the network device may notify the network device that receives the packet to send the packet based on a shortest path. Therefore, after the packet is sent through an inter-group path once on the non-shortest path, a network terminal that subsequently receives the packet sends the packet based on the shortest path. In addition, because the shortest path includes only one inter-group path, in a process of sending a packet based on the non-shortest path, the packet needs to pass through only two inter-group paths, and is sent to a destination device. Therefore, a problem that there are excessive hops of the network device or there is a loop in the path for sending the packet can be avoided, and packet sending efficiency can be improved to some extent.

Under the foregoing sending rule, that the first network device sends the packet to the next-hop device may include the following three sending cases.

Sending case 1: It is determined that the path for forwarding the packet is the non-shortest path, and the next-hop device and the first network device on the non-shortest path do not belong to a same group.

Sending case 2: It is determined that the path for forwarding the packet is the non-shortest path, and the next-hop device and the first network device on the non-shortest path belong to a same group.

Sending case 3: It is determined that the path for forwarding the packet is the shortest path.

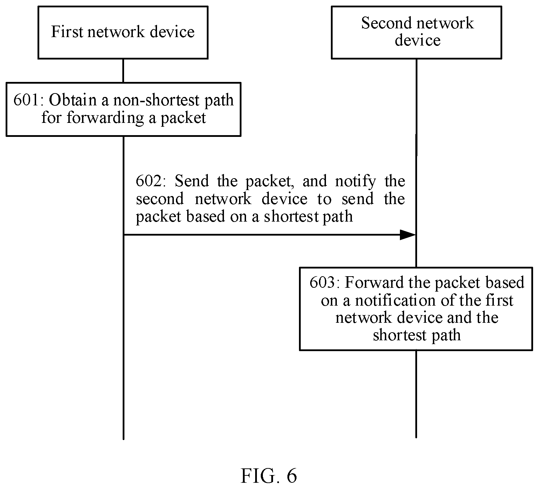

**FIG. 6** **shows a packet sending method according to an embodiment of this application in the sending case 1. Refer to** **FIG. 6****. The method includes the following steps.**

Step 601: The first network device obtains the non-shortest path for sending the packet.

After determining to send the packet based on the non-shortest path, the first network device may obtain, from the FIB, the next-hop address corresponding to the non-shortest path. The next-hop address is an address corresponding to a next-hop device on the non-shortest path for the first network device to send the packet to the destination host. The next-hop device may be referred to as a second network device, and the second network device and the first network device belong to different groups.

Step 602: The first network device sends the packet to the second network device, and notifies the second network device to send the packet based on the shortest path.

The first network device may send the packet to the second network device based on the obtained next-hop address corresponding to the non-shortest path, and notify the second network device to send the packet based on the shortest path.

The non-shortest path for sending the packet by the first network device may be considered as a path for sending the packet to the destination device via a network device in a transit group, and the transit group is a group different from a group to which the host sending the packet belongs and a group to which a target device belongs. After the first network device sends the packet to the network device (for example, the second network device) in the transit group, the network device in the transit group may send the packet to the destination host based on a shortest path. The shortest path may be considered as a path for the network device in the transit group to send the packet to the destination host on the non-shortest path for the first network device to send the packet. Therefore, the non-shortest path for the first network device to send the packet to the destination host includes the shortest path for the second network device to send the packet to the destination host.

FIG. 3 is a schematic diagram of a structure of an HPC network, for example, the dragonfly network in FIG. 1. In FIG. 3, when the host S sends a target packet to the host D, the host S may send a packet A to the node 1, and the node 1 may query an FIB to determine a shortest path and a non-shortest path for forwarding the packet A. It can be learned from FIG. 3 that, the shortest path for the host S to send the packet A to the host D is host S-node 1-node 2-node 12-node 10-host D. For the node 1, the next-hop device node 2 on the shortest path and the next-hop devices node 4 and node 16 on the non-shortest path may be determined. If the node 1 detects that the node 2 is congested, the node 1 may choose to send the packet A to the node 4 or the node 16, that is, select the non-shortest path to forward the packet.

An example in which the node 1 sends the packet A to the node 16 is used. The node 1 may be considered as the first network device, and the node 16 may be considered as the second network device. A non-shortest path for the node 1 to send the packet A to the host D is node 1-node 16-node 14-node 9-node 10-host D. When the node 1 sends the packet A to the node 16, because the node 16 and the node 1 belong to different groups, the node 1 may further notify the node 16 to forward the packet Abased on a shortest path. The shortest path for the node 16 to send the packet A is node 16-node 14-node 9-node 10-host D.

The first network device may notify the second network device to forward the packet based on the shortest path in at least the following manners.

Manner 1: The first network device sets shortest path information in the packet.

The shortest path information indicates the second network device to forward the packet based on the shortest path. The shortest path information may be a specific value, and the value is preset by a skilled person, for example, may be "0". The shortest path information may be set in an IP header or a tunnel header, for example, may be set in an extension field of the IP header or the tunnel header, for example, may be set in a flag field of the IP header; or when the packet is sent by using a VXLAN protocol, the shortest path information may be set in a VXLAN network identifier (VXLAN Network Identifier, VNI) field of a tunnel header. In this way, non-shortest path information is set in the packet to notify the first network device to send the packet based on the non-shortest path, so that sending an additional notification to the first network device can be prevented, an amount of data transmitted between the network devices in the HPC network is reduced, and the efficiency of packet sending between the network devices can be improved. In addition, the shortest path information is set in the packet by changing a field value of the extension field of the IP header or the tunnel header. A setting manner is simple, and a packet format does not need to be changed.

Manner 2: The first network device sends the packet to the second network device through a first interface corresponding to the shortest path, to indicate the second network device to forward the packet based on the shortest path.

In this application, each network device establishes a connection to another network device through at least two interfaces. The at least two sub-interfaces may be two different physical interfaces, or may be two logical interfaces (for example, layer 3 sub-interfaces) created on one physical interface, or may be one physical interface and one logical interface created on the physical interface. In the at least two sub-interfaces, one interface may send or receive only a packet on a shortest path, and the other interface may send or receive only a packet on a non-shortest path.

When the first network device sends the packet to the second network device through the first interface corresponding to the shortest path, the second network device may receive the packet through the interface corresponding to the shortest path, and determine to send the packet based on the shortest path. In this way, a network device may indicate, only by sending a packet through different interfaces, a path that should be selected when a network device that receives the packet sends the packet, and does not need to send an additional notification to the first network device, so that the amount of data transmitted between the network devices in the HPC network can be reduced, and the efficiency of packet sending between the network devices can be improved.

Step 603: The second network device forwards the packet based on a notification of the first network device and the shortest path.

The second network device may receive the packet and the notification that are sent by the first network device, determine, based on the notification, the shortest path for sending the packet, and forward the packet based on the determined shortest path.

Corresponding to the manner 1 in which the first network device notifies the second network device to forward the packet based on the shortest path, the second network device determines, based on the shortest path information set in the packet, to send the packet based on the shortest path.

After receiving the packet sent by the first network device, the second network device may determine whether the received packet carries the shortest path information, for example, determine whether the field value of the extension field of the IP header in the packet is 0. After it is determined that the packet carries the shortest path information, the shortest path for sending the packet may be determined, and the packet is forwarded based on the determined shortest path.

Corresponding to the manner 2 in which the first network device notifies the second network device to forward the packet based on the shortest path, the second network device receives, through the first interface corresponding to the shortest path, the packet sent by the first network device, and determines to send the packet based on the shortest path.

If the second network device receives, through the first interface corresponding to the shortest path, the packet sent by the first network device, the second network device may determine the shortest path for sending the packet, and forward the packet based on the determined shortest path.

In a possible case, the packet received by the first network device may be sent by the another network device connected to the first network device. In this case, the another network device may notify the first network device of the non-shortest path. A specific notification manner is the same as the two manners in step 602, and details are not described herein again. Correspondingly, that the first network device obtains the non-shortest path for sending the packet in step 601 includes: The first network device obtains, based on the non-shortest path information set in the packet, the non-shortest path for sending the packet; or the first network device receives the packet through a second interface corresponding to the non-shortest path, and determines the non-shortest path for sending the packet. For specific processing, refer to step 603, and details are not described herein again.

In addition, it should be noted that the processing in the foregoing steps 601 to 603 is processing of sending the packet by the first network device to the second network device, and is processing performed by the network device in the HPC network on a forwarding plane. Before this, the second network device may send, to the first network device, a route advertisement message corresponding to the destination device of the packet, so that the forwarding table of the first network device stores an address of the second network device. Corresponding processing is as follows.

The first network device receives the route advertisement message sent by the second network device, where the route advertisement message includes an address of the destination device of the packet, a path cost value from the first network device to the destination device via the second network device, and a next-hop address for sending the packet by the first network device to the destination device; and the first network device determines, based on the path cost value, that a path from the first network device to the destination device is the non-shortest path. The processing is processing performed by the network device in the HPC network on the control plane, and is not described in detail herein.

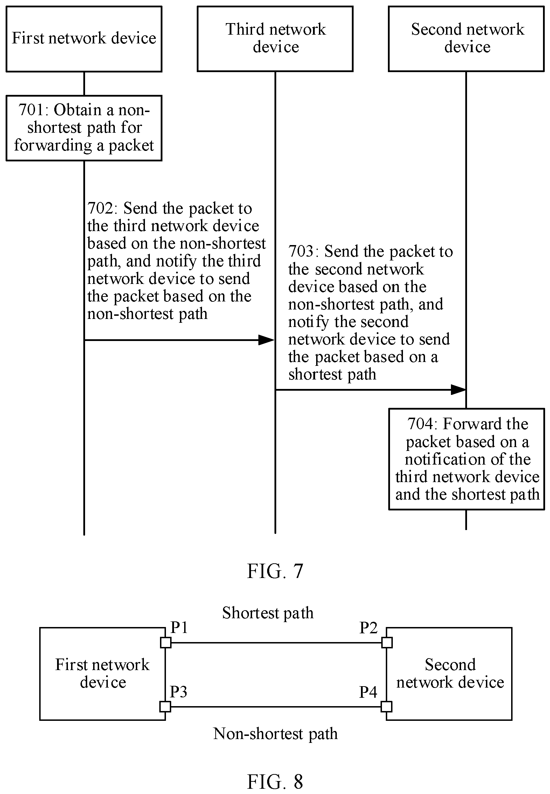

**FIG. 7** **shows a packet sending method according to an embodiment of this application in the sending case 2. Refer to** **FIG. 7****. The method includes the following steps.**

Step 701: The first network device obtains the non-shortest path for sending the packet.

The next-hop device on the non-shortest path may be referred to as a third network device. The third network device and the first network device belong to a same group, and the third network device is on the non-shortest path for the first network device to send the packet to the destination host.

Step 702: The first network device sends the packet to the third network device based on the non-shortest path, and notifies the third network device to send the packet based on the non-shortest path.

Still refer to FIG. 3. When the host S sends the target packet to the host D, the host S may send the packet to the node 1, and the node 1 may query the FIB to determine a shortest path and a non-shortest path for forwarding the target packet. It can be learned from FIG. 3 that, the shortest path for the host S to send a packet B to the host D is host S-node 1-node 2-node 12-node 10-host D. For the node 1, the next-hop device node 2 on the shortest path and the next-hop nodes node 4 and node 16 on the non-shortest path may be determined. If the node 1 detects that the node 2 is congested, the node 1 may choose to send the target packet to the node 4 or the node 16, that is, select the non-shortest path to forward the packet.

For example, if the node 1 sends the packet B to the node 4, the node 1 may be considered as the first network device, the node 4 may be considered as the third network device, and the node 8 may be considered as the second network device. Because the node 4 and the node 1 belong to a same group, the node 1 may notify the node 4 to forward the packet B based on the non-shortest path. The non-shortest path for the node 4 to send the packet B is node 4-node 8-node 6-node 11-node 10-host D.

The first network device may notify the third network device to forward the packet based on the non-shortest path in at least the following two manners.

Manner 1: The first network device sets non-shortest path information in the packet.

The non-shortest path information indicates the second network device to forward the packet based on the shortest path. Shortest path information may be a specific value, and the value is preset by a skilled person, for example, "1". The value and the shortest path information may be set in a same field, but are represented by different values. Same as the shortest path information, the non-shortest path information may be set in an IP header or a tunnel header, for example, may be set in an extension field of the IP header or the tunnel header, for example, may be set in a flag field of the IP header; or when the packet is sent by using a VXLAN protocol, the shortest path information may be set in a VNI field of the tunnel header.

Manner 2: The first network device sends the packet to the second network device through a second interface corresponding to the shortest path, to indicate the second network device to forward the packet based on the non-shortest path.

In this application, each network device establishes a connection to another network device through at least two interfaces. The at least two sub-interfaces may be two different physical interfaces, or may be two logical interfaces (for example, layer 3 sub-interfaces) created on one physical interface, or may be one physical interface and one logical interface created on the physical interface. In the at least two sub-interfaces, one interface may send or receive only a packet on a shortest path, and the other interface may send or receive only a packet on a non-shortest path.

When the first network device sends the packet to the second network device through the second interface corresponding to the non-shortest path, the second network device may receive the packet through the interface corresponding to the shortest path, and determine to send the packet based on the non-shortest path. In this way, the network device may determine, through only the interface for receiving the packet, a path for sending the packet, and does not need to decapsulate the packet or determine a congestion status of the shortest path or the non-shortest path, so that the packet sending efficiency of the network device is improved.

As shown in FIG. 8, connections may be established between the first network device and the second network device through two pairs of interfaces, including P1 and P3, and P2 and P4. P1 and P3 separately correspond to a shortest path, and P2 and P4 separately correspond to a non-shortest path. In this way, when the first network device sends a packet to the second network device through P1, the P3 interface of the second network device receives the packet, and determines to send the received packet based on the shortest path. When the first network device sends a packet to the second network device through P2, the P4 interface of the second network device receives the packet, and determines to send the received packet based on the non-shortest path.

In a possible implementation, a shortest-path forwarding table and a non-shortest-path forwarding table are set in the first network device. The first interface of the first network device is bound to the shortest-path forwarding table, to send or receive the packet on the shortest path. The second interface of the first network device is bound to the non-shortest-path forwarding table, to send or receive the packet on the non-shortest path.

The shortest-path forwarding table includes a next-hop address for sending a packet to each host in the HPC network based on the shortest path, where the next-hop address may be an interface address of an interface on the shortest path corresponding to a next-hop device; and the non-shortest-path forwarding table includes a next-hop address for sending a packet to each host in the HPC network based on the non-shortest path, where the next-hop address may be an interface address of an interface on the non-shortest path corresponding to a next-hop device. In this way, the network device may search the shortest-path forwarding table or the non-shortest-path forwarding table bound to the interface for receiving the packet, to determine the next-hop address on the shortest path or the non-shortest path for sending the packet. It can be learned that in this application, different interfaces are separately bound to the shortest-path forwarding table and the non-shortest-path forwarding table, so that different interfaces correspond to different paths (for example, the shortest path and the non-shortest path), and the shortest-path forwarding table including the shortest path and the non-shortest-path forwarding table including the non-shortest-path forwarding table are separately stored. This improves table query efficiency.

In addition, it should be noted that in addition to the shortest-path forwarding table and the non-shortest-path forwarding table, each network device may further store a combined forwarding table corresponding to the shortest-path forwarding table and the non-shortest-path forwarding table. The combined forwarding table includes the next-hop address for sending the packet to each host in the HPC network based on the shortest path, and also includes the next-hop address for sending the packet to each host in the HPC network based on the non-shortest path. After receiving the packet sent by the host, the network device connected to the host may directly determine, in the combined forwarding table, the shortest path and the non-shortest path for sending the packet. The shortest path and the non-shortest path for sending the packet do not need to be respectively determined in the non-shortest-path forwarding table of the non-shortest-path forwarding table, so that the table query efficiency can also be improved.

Step 703: The third network device sends the packet to the second network device based on the non-shortest path, and notifies the second network device to send the packet based on the shortest path.

The second network device and the third network device belong to different groups, and the second network device is a next-hop device on the non-shortest path for the third network device to send a packet. After receiving the packet sent by the first network device and the notification of sending the packet based on the non-shortest path, the third network device may obtain the non-shortest path for sending the packet, and send the packet to the second network device.

Corresponding to the manner 1 in which the first network device notifies the third network device to forward the packet based on the non-shortest path, the third network device determines, based on the non-shortest path information set in the packet, to send the packet based on the non-shortest path.

After receiving the packet sent by the first network device, the third network device may determine whether the received packet carries the non-shortest path information, for example, determine whether a field value of the extension field of the IP header in the packet is 1. After it is determined that the packet carries the non-shortest path information, the non-shortest path for sending the packet may be determined, and the packet is forwarded based on the determined non-shortest path.

Corresponding to the manner 2 in which the first network device notifies the third network device to forward the packet based on the non-shortest path, the third network device receives, through the second interface corresponding to the non-shortest path, the packet sent by the first network device, and determines to send the packet based on the non-shortest path.

In step 703, for processing in which the third network device notifies the second network device to send the packet based on the shortest path, refer to processing in which the first network device notifies the second network device to send the packet based on the shortest path in step 602. Details are not described herein again.

Step 704: The second network device forwards the packet based on the notification of the third network device and the shortest path.

The second network device may receive the packet and the notification that are sent by the third network device, and forward the packet based on the notification and the shortest path. Processing in step 704 is similar to the processing in step 603, and details are not described herein again.

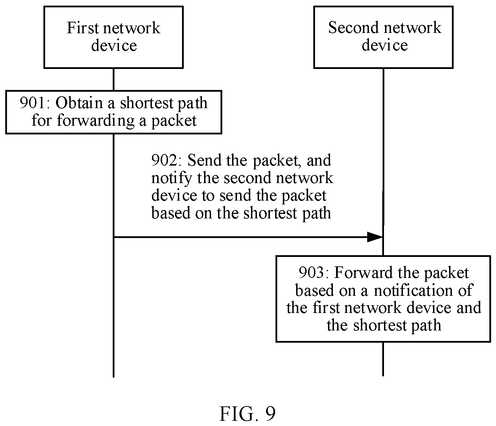

**FIG. 9** **shows a packet sending method according to an embodiment of this application in the sending case 3. Refer to** **FIG. 9****. The method includes the following steps.**

Step 901: The first network device obtains the shortest path for forwarding the packet.

After determining to send the packet based on the shortest path, the first network device may obtain, from the FIB, the next-hop address corresponding to the non-shortest path. The next-hop address is an address corresponding to a next-hop device on the shortest path for the first network device to send the packet to the destination host. The next-hop device may be referred to as a fifth network device, and the fifth network device and the first network device may belong to a same group, or may belong to different groups.

That the first network device determines to send the packet based on the shortest path may include the following two cases:

In a possible implementation, the packet sent by the first network device to the fifth network device may be sent by the host connected to the first network device to the first network device. When the packet is sent by the host connected to the first network device to the first network device, the first network device may determine congestion statuses of the shortest path and the non-shortest path for sending the packet. There may be a plurality of shortest paths and a plurality of non-shortest paths for sending the packet by the first network device. If the first network device determines that a non-congested shortest path exists in the shortest paths for sending the packet, the first network device may select a non-congested shortest path to send the packet.

In a possible implementation, the packet sent by the first network device to the fifth network device may be sent by another network device in a same group to the first network device. If the another network device in the same group sends the packet to the first network device based on the shortest path, shortest path information is set in the packet. For example, the shortest path information may be set in the packet by setting a field value of an extension field. After receiving the packet that carries the shortest path information, the first network device may determine to send the packet based on the shortest path.

Step 902: The first network device sends the packet to the fifth network device, and notifies the fifth network device to send the packet based on the shortest path.

When sending the packet to the fifth network device, the first network device may notify the fifth network device to send the packet to the destination device based on the shortest path.

Still refer to FIG. 3. When the host S sends a packet C to the host D, the host S may send the packet to the node 1, and the node 1 may query an FIB to determine a shortest path and a non-shortest path for forwarding the packet C. It can be learned from FIG. 6 that, the shortest path for the host S to send the packet C to the host D is host S-node 1-node 2-node 12-node 10-host D. For the node 1, the next-hop device node 2 on the shortest path and the next-hop devices node 4 and node 16 on the non-shortest path may be determined. If it is detected that the node 2 is not congested, the packet C may be sent to the node 2, that is, the shortest path is selected to forward the packet. The node 1 may be considered as the first network device, and the node 2 may be considered as the fifth network device. When sending the target packet to the node 2, the node 1 may notify the node 2 to forward the packet based on the shortest path.

Step 903: The fifth network device forwards the packet based on the notification of the first network device and the shortest path.

The fifth network device may receive the packet and the notification that are sent by the first network device, and forward the packet based on the notification and the shortest path. For a network device that receives the notification of sending the packet based on the shortest path, when sending the packet to a next-hop device, the device may continue to notify the next-hop device to send the packet based on the shortest path. In other words, in this application, provided that the network device determines to send the packet based on the shortest path, a network device that subsequently receives the packet may always send the packet based on the shortest path. Therefore, the problem that there are excessive hops of the network device or there is the loop in the path for sending the packet can be avoided, and the packet sending efficiency can be improved to some extent.

It should be noted that FIG. 4, FIG. 6, FIG. 7, and FIG. 9 are applicable to a single-tenant scenario, or are applicable to a multi-tenant scenario. In the single-tenant scenario, all hosts in the HPC network are provided for one tenant. In the multi-tenant scenario, hosts in the HPC network can be provided for a plurality of tenants. A packet sending method in the single-tenant scenario is the same as that in the multi-tenant scenario, except that a method for distinguishing the tenants needs to be additionally added in the multi-tenant scenario. The following describes two methods for distinguishing the tenants in the multi-tenant scenario:
Method 1: Allocate different interfaces to each tenant on each network device, and distinguish the tenants by using interfaces.

When there are a small quantity of tenants, the interfaces of each network device may be allocated to different tenants. In this way, in a packet forwarding process, the packet is transmitted only through an interface corresponding to a tenant to which the packet belongs. In this way, the tenants can be distinguished, and IP addresses of the tenants can be isolated.

Method 2: Add a tenant identifier (Identity document, ID) to the packet.

In the multi-tenant scenario, different tenant IDs are allocated to different tenants. When a route is established for each tenant, a corresponding routing table may be established for each tenant in a network device based on different tenant IDs, and a corresponding forwarding table is generated. When a host sends a packet, a tenant ID of a tenant corresponding to the host may be added to the packet. For example, the tenant ID may be added to a specified field of an IP header, or the tenant ID is added to a tunnel header by using a tunneling protocol. In this way, after receiving the packet, the network device may query a corresponding forwarding table based on the tenant ID added to the packet, to forward the packets corresponding to different tenants.

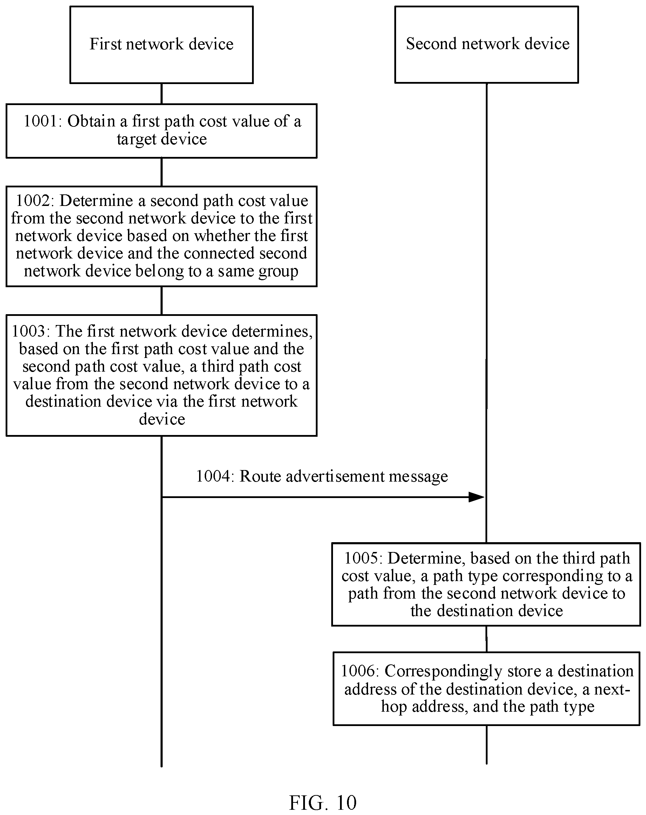

FIG. 10 is a schematic diagram of a route establishment method according to an embodiment of this application. The following describes in detail a processing procedure shown in FIG. 10 with reference to a specific implementation. Content may be as follows.

Step 1001: A first network device obtains a first path cost value of a destination device.

In this processing procedure, the first network device may be any network device in an HPC network, and a second network device is a network device connected to the first network device.

In a possible case, the destination device is a host connected to the first network device. In this case, a path for the first network device to send a packet to the destination device includes only one ingress link. Therefore, a first link cost value corresponding to the ingress link may be determined as the first path cost value from the first network device to the destination device. A specific value of the first link cost value may be preset by a skilled person. Because a link cost value corresponding to the ingress link is the smallest, the first link cost value may be set to 0. In other words, when the destination device is the host connected to the first network device, the first network device may determine 0 as the path cost value corresponding to the path from the first network device to the destination device.

In another possible case, the first path cost value of the destination device obtained by the first network device may be carried in a route advertisement message sent by another network device to the first network device. This case is not described herein.

Step 1002: The first network device determines a second path cost value from the second network device to the first network device based on whether the first network device and the connected second network device belong to a same group.

There may be a plurality of second network devices connected to the first network device. The first network device may determine, based on a type of a link established with the second network device, whether the first network device and the second network device belong to a same group. For example, when the link established between the first network device and the second network device is an intra-group link, it may be determined that the first network device and the second network device belong to a same group; or when the link established between the first network device and the second network device is an inter-group link, it may be determined that the first network device and the second network device do not belong to a same group.

If the first network device and the second network device belong to a same group, the first network device may determine, as the second path cost value, a second link cost value corresponding to the intra-group link; or if the first network device and the second network device do not belong to a same group, the first network device may determine, as the second path cost value, a third link cost value corresponding to the inter-group link, where the third link cost value is greater than the second link cost value, and the second link cost value is greater than the first link cost value. To better calculate a quantity of intra-group paths and a quantity of inter-group paths included in the path, the third link cost value may be an integer 10 times, a hundred times, a thousand times, or the like of the second link cost value. For example, the third link cost value is 1000, and the second link cost value is 1.

Step 1003: The first network device determines, based on the first path cost value and the second path cost value, a third path cost value from the second network device to the destination device via the first network device.

After determining the first path cost value and the second path cost value, the first network device may determine a sum of the first path cost value and the second path cost value as the third path cost value from the second network device to the destination device via the first network device.

Step 1004: The first network device sends a route advertisement message to the second network device.

After determining the third path cost value from the second network device to the destination device via the first network device, the first network device may send the route advertisement message (where the route advertisement message may be referred to as a route advertisement message) to the second network device. The route advertisement message carries routing information to the destination device, including a destination address of the destination device, the third path cost value, and a next-hop address for sending the packet by the second network device to the destination device, where the next-hop address may be an interface address corresponding to an interface that is of the first network device and that is connected to the second network device.

Step 1005: The second network device determines, based on the third path cost value, a path type corresponding to a path from the second network device to the destination device.

The path type is a shortest path type or a non-shortest path type. A skilled person may preset a correspondence between a path cost value and a path type, and store the correspondence in each network device. After receiving the route advertisement message sent by the first network device, the second network device may determine, based on the third path cost value included in the route advertisement message and the stored correspondence, the path type corresponding to the path for the second network device to send the packet to the destination device via the first network device.

An example in which the first link cost value is 0, the second link cost value is 1, and the third link cost value is 1000 is used. The correspondence between a path cost value and a path type may be shown in Table 2.

**Table 2**

| Path type | Path cost value |
|---|---|
| Shortest path | [0, 3] |
| NA | [3, 999] |
| Shortest path | [1000, 1999] |
| Non-shortest path | [2000, 2999] |
| NA | [3000, +∞) |

It can be learned from Table 1 that, division of the shortest path and the non-shortest path is related to a quantity of inter-group links included in the path. When a path includes two or more inter-group links, the path may be considered as the non-shortest path. NA indicates that no path corresponding to the path cost value exists.

In another possible case, division of the shortest path and the non-shortest path may be related to both a quantity of intra-group links and a quantity of inter-group links included in the path. The example in which the first link cost value is 0, the second link cost value is 1, and the third link cost value is 1000 is still used. The correspondence between a path cost value and a path type may be shown in Table 3.

**Table 3**

| Path type | Path cost value |
|---|---|
| Direct path | 0 |
| Intra-group shortest path | 1 |
| Intra-group non-shortest path | 2 |
| NA | [3, 999] |
| Inter-group shortest path | [1000, 1999] |
| Inter-group non-shortest path | [2000, 2999] |
| NA | [3000, +∞) |

The direct path is a path type corresponding to a path for sending a packet between a network device and a connected host. The intra-group shortest path is a path type corresponding to a path for sending a packet between two connected network devices in a same group. The intra-group non-shortest path is a path type corresponding to a path for sending a packet between two indirectly connected network devices in a same group via another network device. The inter-group shortest path is a path type corresponding to a path for sending a packet between two network devices in different groups through an inter-group link between the groups to which the two network devices belong. The inter-group non-shortest path is a path type corresponding to a path for sending a packet between two network devices in different groups via a network device in another group (that is, a path for sending the packet through two inter-group links).

Step 1006: The second network device correspondingly stores the destination address of the destination device, the next-hop address, and the path type.

After determining the path type corresponding to the path to the destination device, the second network device may correspondingly store the destination address of the destination device, the next-hop address, and the path type in a routing table.

In a possible case, a routing table stored in a network device includes at least a shortest-path routing table and a non-shortest-path routing table. Corresponding processing may be as follows.

If the path type is the shortest path type, the second network device stores the destination address of the destination device, the next-hop address, and the path type in the shortest-path routing table. If the path type is the non-shortest path type, the second network device stores the destination address of the destination device, the next-hop address, and the path type in the non-shortest-path routing table.

The first path cost value of the destination device obtained by the first network device in step 1001 may be carried in a route advertisement message that is sent by the another network device and that corresponds to the destination device and that is received by the first network device. In this case, before sending the route advertisement message to the second network device, the first network device may perform processing that is the same as that performed by the second network device in steps 1005 and 1006, and then perform processing in step 1002. Similarly, after receiving the route advertisement message sent by the first network device and performing steps 1005 and 1006, the second network device may perform processing that is the same as that performed by the first network device in steps 1001, 1002, and 1003, to send the route advertisement message to the another network device. In this way, routing information for sending a packet to each host may be propagated between network devices in the HPC network, so that the network devices learn routing information of different hosts. In addition, the foregoing steps 1001 to 1006 are processing of sending the route advertisement message by the first network device to the second network device. Similarly, the second network device may send a route advertisement message to the first network device, and corresponding processing is similar to that in steps 1001 to 1006. Details are not described herein again.

In addition, when a network device determines that a path cost value in a route advertisement message is greater than a first cost threshold, the network device may stop propagating the route advertisement message to a network device in another group. For example, a cost value of the inter-group link may be equal to 1000, and the first cost threshold may be set to 2000. In this way, a maximum path cost value corresponding to a route learned by the network device does not exceed 3000, that is, there are a maximum of two learned paths to different hosts. Correspondingly, before performing step 1002, the first network device may determine values of the first path cost value and the first cost threshold. If the first path cost value is less than or equal to the first cost threshold, step 1002 may continue to be performed; otherwise, step 1002 may not be performed any more, to be specific, the first network device stops sending the route advertisement message to the second network device. In another possible case, when a network device determines that a path cost value in a route advertisement message is greater than a first cost threshold, the network device may send the route advertisement message only to a network device in a group to which the network device belongs, and stop propagating the route advertisement message to a network device in another group.

It can be learned that according to the route establishment method provided in this application, each network device in the HPC network can learn of a shortest path and a non-shortest path for sending a packet to different hosts.

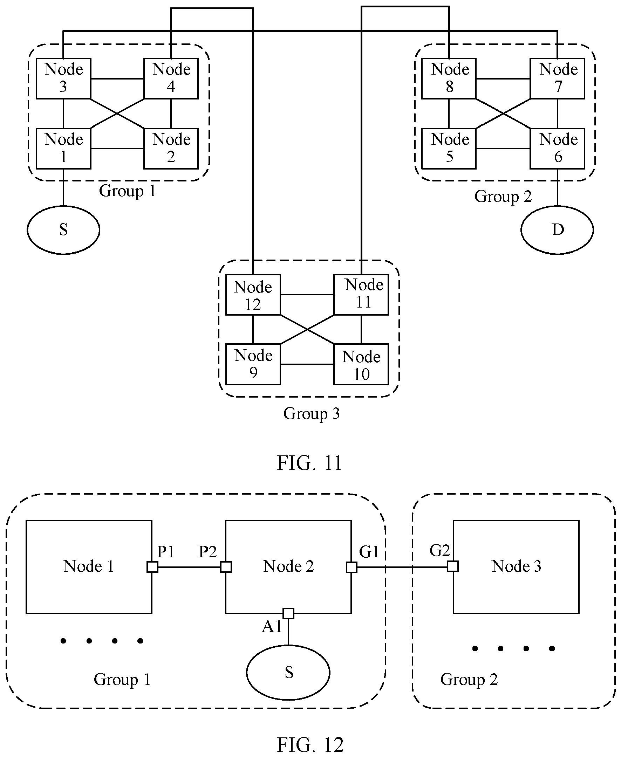

The following further describes the route establishment method shown in FIG. 10 by using a BGP protocol as an example. FIG. 11 is a schematic diagram of a route establishment method when the BGP protocol is used.

The BGP protocol can be applied to inter-AS and intra-AS routing protocols. However, a group in a network topology of dragonfly or dragonfly+ in this application may be considered as an AS. Therefore, the BGP protocol may also be in the network topology provided in this application. In the BGP protocol, two devices in different groups may establish an external border gateway protocol session (External Border Gateway Protocol session, EBGP session), and two devices in a group may establish an internal border gateway session (Internal Border Gateway Protocol session, IBGP session).

In addition, it should be noted that, in this application, a plurality of routing tables may be established for each network device, including a full virtual routing and forwarding table (Full Virtual Routing Forwarding, Full VRF), a shortest-path virtual routing and forwarding table (min Virtual Routing Forwarding, min VRF), and a non-shortest-path virtual routing and forwarding table (non-min Virtual Routing Forwarding, non-min VRF). The min VRF is used for storing routing information corresponding to the shortest path, the min VRF is used for storing routing information corresponding to the non-shortest path, and the full VRF is used for storing all routing information. In this way, table query efficiency can be improved by setting routing tables corresponding to different path types. The routing information may include an address of a destination device, a next-hop address, an outbound interface, a route cost value, a path type, and the like.

Refer to FIG. 11. The route establishment method when the BGP protocol is used is as follows.

Step 1: A node 6 obtains an IP address (10.2.8.1/24) of an interface corresponding to a destination host, and generates 10.2.8.1/32 (host route) and 10.2.8.0/24 (network segment route) based on the IP address, where the host route is used for establishing an IBGP session or an EBGP session with another node. For the network segment route, the node 6 may use the network segment route as a destination address of the destination host, generate corresponding first routing information, and store the first routing information in the full VRF. The first routing information includes a destination address, a next-hop address, a path cost value, a path type, and the like. The destination address and the next-hop address are network segment routes, and the path cost value is 0.

Step 2: The node 6 imports the first routing information into the min VRF from the full VRF.

Step 3: The node 6 obtains the first routing information from the min VRF, increases the path cost value in the first routing information by one, changes the next-hop address in the first routing information to an address corresponding to the node 6, to obtain second routing information, and sends the second routing information to another node (node 5/7/8) in a group 2 by using the IBGP session.

When receiving the second routing information, the node 5/7/8 adds the second routing information to a local min VRF and imports the full VRF. Then, a path cost value in the second routing information is increased by one, a next-hop address in the second routing information is changed to a local corresponding address, to obtain third routing information, and then, the third routing information is reflected to the other nodes except the node 6 in the group 2. To avoid a long delay, the routing information can be reflected only once.

Step 4: An edge node (edge node) in the group 2, to be specific, a node connected to a node in another group to establish an inter-group link, is the node 7/8 herein. When receiving the second routing information, the edge node may increase the path cost value in the second routing information by 1000, change the next-hop address in the second routing information to the local corresponding address, to obtain fourth routing information, and then send the fourth routing information to a node 3 and a node 11.

Step 5: After receiving the fourth routing information, an edge node (node 3) in a group 1 and an edge node (node 11) in a group 3 may add the fourth routing information to the local min VRF, and then import the fourth routing information to a local full VRF. Then, a path cost value in the fourth routing information may be increased by one, a next-hop address in the fourth routing information is changed to a local address, to obtain fifth routing information, and the fifth routing information is sent to other nodes in the group, to generate a redundancy protection route.

Step 6: After receiving the fifth routing information, an edge node (node 12) in the group 3 may increase a path cost value in the fifth routing information by 1000, change a next-hop address in the fifth routing information to an address of the node 12, to obtain sixth routing information, and then send the sixth routing information to a node 4.

Step 7: After receiving the sixth routing information, the node 4 may determine, based on a path cost value in the sixth routing information, that a path type corresponding to the sixth routing information is a non-shortest path type, and may add the sixth routing information to the local full VRF and a local non-min VRF.

Step 8: The node 4 increases the path cost value in the sixth routing information by one, changes a next-hop address in the sixth routing information to an address corresponding to the node 4, to obtain seventh routing information, and then reflects the seventh routing information to another node (node 1/2/3) in the group 1. Because a path cost value in the seventh routing information already exceeds 2000, that is, the node in the group 1 needs to pass through two inter-group links to a host D, after receiving the sixth routing information or the seventh routing information, the node in the group 1 may no longer send corresponding routing information to a node in another group.

As shown in FIG. 12, in a possible case, the routing table stored in the network device includes at least the shortest-path routing table and the non-shortest-path routing table, and may be separately bound to different interfaces of the network device.

Two network devices in a same group may be connected through a local interface (local port). As shown in FIG. 12, a connection is established between a node 1 and a node 2 in a group 1 through local ports P 1 and P2. Two network devices in different groups may be connected through a global interface (global port). As shown in FIG. 12, a connection is established between the node 2 in the group 1 and a node 3 in a group 2 through global ports G1 and G2. A network device and a host may be connected through an ingress interface (access port). As shown in FIG. 12, the node 2 in the group 1 establishes a connection with a host through an access port A1.

It can be learned that a network device may have three types of interfaces, including the local port, the global port, and the access port. On the basis of the local port or the global port, a sub-interface can be added and the sub-interface is bound to different routing tables through different interfaces. For example, one or two L3 sub-interfaces (Layer 3 sub-interfaces) may be created based on the local port or the global port of the network device, to bind the min VRF and the non-min VRF, respectively. In addition, the access port of the network device can be bound to the full VRF.

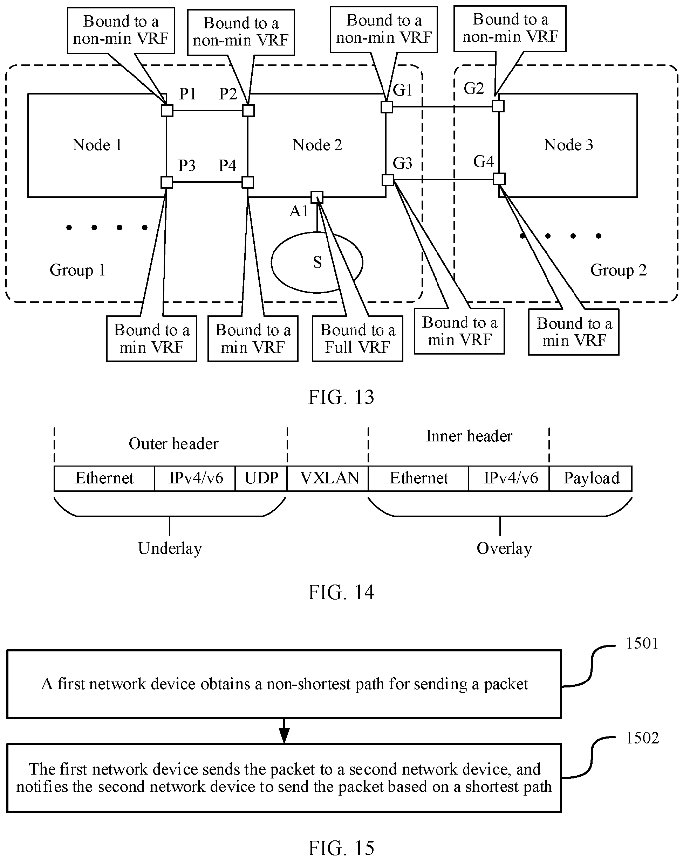

As shown in FIG. 13, FIG. 13 is a schematic diagram of a sub-interface created on the basis of FIG. 12. P3 and P4 are sub-interfaces created on the basis of P1 and P2. P1 establishes a connection with P2 and is used for binding the non-min VRF, and P3 establishes a connection with P4 and is used for binding the min VRF. G3 and G4 are sub-interfaces created on the basis of G1 and G2. G1 establishes a connection with G2 and is used for binding the non-min VRF. G3 establishes a connection with G4 and is used for binding the min VRF. A1 is bound to the full VRF. In this way, the network device may send routing information to another network device through an interface bound to a routing table in which the routing information is located. The another network device may store, through the interface that receives the routing information, the routing information in the routing table bound to the interface. In addition, it should be noted that, after receiving the routing information, the network device may determine, based on a corresponding path cost value, a path type corresponding to the routing information. If the determined path type is inconsistent with the routing table bound to the interface that receives the routing information, the routing information may be re-imported into a corresponding routing table. For example, a min VRF in the node 3 includes a routing message corresponding to a path cost value of 1001, and the node 3 sends the routing message to the node 2 through the G4 interface. However, before sending the routing information, the node 3 increases the path cost value in the routing information by 1000. In this way, after receiving the routing information through the G3 interface bound to the min VRF, the node 2 may first store the routing information in the min VRF, and because the path cost value in the routing information is greater than 2000, the routing information may be stored in the non-min VRF. In this way, for the min VRF bound to the interface, the shortest-path forwarding table in the embodiment corresponding to FIG. 7 may be generated; for the non-min VRF bound to the interface, the non-shortest-path forwarding table in the embodiment corresponding to FIG. 7 may be generated; and for the full VRF bound to the interface, the combined forwarding table in the embodiment corresponding to FIG. 7 may be generated.

It should be noted that the foregoing route establishment method is applicable to a single-tenant scenario, or is applicable to a multi-tenant scenario. The route establishment method in the single-tenant scenario is the same as that in the multi-tenant scenario, except that a method for distinguishing the tenants needs to be additionally added in the multi-tenant scenario, and a corresponding routing table is established for each tenant in each network device. The following describes two methods for distinguishing the tenants in the multi-tenant scenario:
Method 1: Allocate different interfaces to each tenant on each network device, and distinguish the tenants by using interfaces.

When there are a small quantity of tenants, the interfaces of each network device may be allocated to different tenants. In a process of establishing a route, a packet is transmitted only through an interface corresponding to a tenant to which the packet belongs. In this way, the tenants can be distinguished, and IP addresses of the tenants can be isolated.

Method 2: Add a tenant ID to the route advertisement message.

In the multi-tenant scenario, different tenants are allocated with different tenant IDs. Therefore, when a route is established for each tenant, a tenant ID may be added to a corresponding route advertisement message, to distinguish different tenants. For example, the tenant ID may be added to a specified field of an IP header, or the tenant ID is added to a tunnel header by using a tunneling protocol.

The tunneling protocol may be a VXLAN protocol, and the tenant ID may be added to a VXLAN network identifier (VXLAN Network Identifier, VNI) field of a VXLAN header. In the VXLAN protocol, a network is divided into an underlay network and an overlay network. For an encapsulation format of the VXLAN header, refer to FIG. 14. In the process of establishing the route, only an IPv4/v6 address on the underlay network is learned. The address is a loopback interface address of a network device connected to a destination host. The tenant ID may be carried in the VNI field in a VXLAN field.

FIG. 15 shows a packet sending method according to an embodiment of this application. Refer to FIG. 15. The method includes the following steps.

Step 1501: A first network device obtains a non-shortest path for sending a packet.

The non-shortest path includes at least two inter-group paths, and a second network device and the first network device on the non-shortest path belong to different groups.

Step 1502: The first network device sends the packet to the second network device, and notifies the second network device to send the packet based on a shortest path.

The non-shortest path includes the shortest path, and the shortest path includes one inter-group path.

For processing of the foregoing steps 1501 and 1502, refer to the content of the embodiment corresponding to the foregoing steps 601 and 602, and details are not described herein again.

Optionally, that the first network device sends the packet to the second network device, and notifies the second network device to send the packet based on a shortest path includes: The first network device sets shortest path information in the packet, where the shortest path information indicates the second network device to send, based on the shortest path, the packet in which the shortest path information is set; and the first network device sends, to the second network device, the packet in which the shortest path information is set.

Optionally, that a first network device obtains a non-shortest path for sending a packet includes: The first network device obtains, based on non-shortest path information set in the packet, the non-shortest path for sending the packet.

Optionally, that the first network device sends the packet to the second network device, and notifies the second network device to send the packet based on a shortest path includes: The first network device sends the packet to the second network device through a first interface corresponding to the shortest path, to indicate the second network device to send the packet based on the shortest path.

Optionally, that a first network device obtains a non-shortest path for sending a packet includes: The first network device receives the packet through a second interface corresponding to the non-shortest path, and determines the non-shortest path for sending the packet.

Optionally, the second network device is a next-hop device of the first network device on the non-shortest path.

Optionally, the first network device sends the packet to the second network device via a third network device, where the third network device and the first network device belong to a same group, and the third network device is on the non-shortest path.

Optionally, before a first network device obtains a non-shortest path for sending a packet, the packet sending method further includes: The first network device receives a route advertisement message sent by the second network device, where the route advertisement message includes an address of a destination device of the packet, a path cost value from the first network device to the destination device via the second network device, and a next-hop address for sending the packet by the first network device to the destination device; and the first network device determines, based on the path cost value, that a path from the first network device to the destination device is the non-shortest path.

Optionally, a path cost value of the inter-group path is greater than a sum of path cost values of all intra-group paths in a same group.

Optionally, the shortest path information is set in an internet protocol IP header or a tunnel header in the packet.

Optionally, the packet sending method is applied to a dragonfly network or a dragonfly+ network.

The packet sending method corresponding to FIG. 15 and the packet sending method provided in the optional manners are described in the foregoing embodiments corresponding to FIG. 4, FIG. 6, FIG. 7, and FIG. 9. For details, refer to the foregoing embodiments corresponding to FIG. 4, FIG. 6, FIG. 7, and FIG. 9. Details are not described herein again.

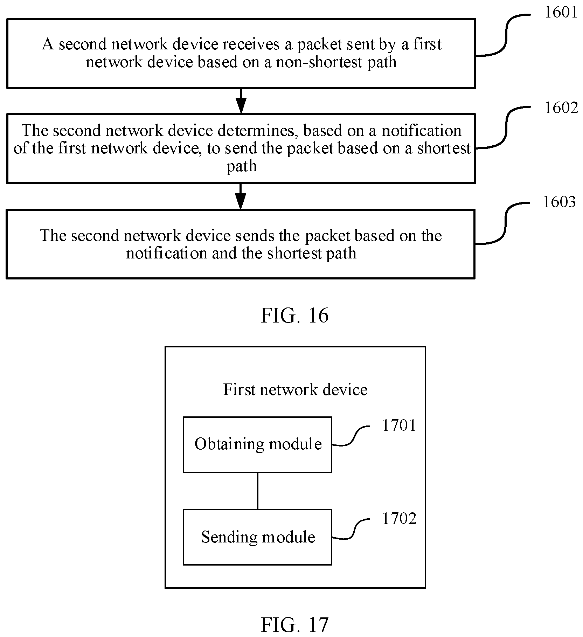

FIG. 16 shows a packet sending method according to an embodiment of this application. Refer to FIG. 16. The method includes the following steps.

Step 1601: A second network device receives a packet sent by a first network device based on a non-shortest path.

Step 1602: The second network device determines to send the packet based on a notification of the first network device and a shortest path.

The non-shortest path includes at least two inter-group paths, the second network device and the first network device belong to different groups, the non-shortest path includes the shortest path, and the shortest path includes one inter-group path.

Step 1603: The second network device sends the packet based on the notification and the shortest path.

For processing of the foregoing steps 1601 to 1603, refer to the content of the embodiment corresponding to the foregoing step 603, and details are not described herein again.

Optionally, that the second network device determines to send the packet based on a notification of the first network device and a shortest path includes: The second network device determines, based on shortest path information set in the packet, to send the packet based on the shortest path, where the shortest path information indicates the second network device to send the packet based on the shortest path.

Optionally, that the second network device determines to send the packet based on a notification of the first network device and a shortest path includes: The second network device receives, through a first interface corresponding to the shortest path, the packet sent by the first network device, and determines to send the packet based on the shortest path.

Optionally, the second network device is a next-hop device of the first network device on the non-shortest path.

Optionally, that the second network device determines to send the packet based on a notification of the first network device and a shortest path includes: The second network device determines, based on a notification that is sent by a third network device and that is about sending the packet based on the shortest path, to send the packet based on the shortest path, where the third network device and the first network device belong to a same group, and the third network device is on the non-shortest path.

Optionally, before a second network device receives a packet sent by a first network device based on a non-shortest path, the method further includes: The second network device receives a route advertisement message sent by a fourth network device, where the route advertisement message includes an address of a destination device of the packet, a path cost value from the second network device to the destination device via the fourth network device, and a next-hop address for sending the packet by the second network device to the destination device; and the second network device determines, based on the path cost value, that a path from the second network device to the destination device is the shortest path.

Optionally, a path cost value of the inter-group path is greater than a sum of path cost values of all intra-group paths in a same group.

Optionally, the shortest path information is set in an internet protocol IP header or a tunnel header in the packet.

Optionally, the method is applied to a dragonfly dragonfly network or a dragonfly+ dragonfly+ network.

The packet sending method corresponding to FIG. 16 and the packet sending method provided in the optional manners are described in the foregoing embodiments corresponding to FIG. 4, FIG. 6, FIG. 7, and FIG. 9. For details, refer to the foregoing embodiments corresponding to FIG. 4, FIG. 6, FIG. 7, and FIG. 9. Details are not described herein again.

FIG. 17 shows a network device according to an embodiment of this application. The network device may be the first network device in the foregoing embodiments, and may be configured to implement the packet sending method in the foregoing embodiments. Refer to FIG. 17. The network device includes:
an obtaining module 1701, configured to obtain a non-shortest path for sending a packet, where the non-shortest path includes at least two inter-group paths, and a second network device and the first network device on the non-shortest path belong to different groups; and specifically, obtaining functions in the foregoing steps 501, 701, 1501, and other implicit steps may be implemented; and
a sending module 1702, configured to: send the packet to the second network device, and notify the second network device to send the packet based on a shortest path, where the non-shortest path includes the shortest path, and the shortest path includes one inter-group path; and specifically, receiving functions in the foregoing steps 502, 1502, and other implicit steps may be implemented.

Optionally, the sending module 1702 is configured to: set shortest path information in the packet, where the shortest path information indicates the second network device to send, based on the shortest path, the packet in which the shortest path information is set; and
send, to the second network device, the packet in which the shortest path information is set.

Optionally, the obtaining module 1701 is configured to obtain, based on non-shortest path information set in the packet, the non-shortest path for sending the packet.

Optionally, the sending module 1702 is configured to send the packet to the second network device through a first interface corresponding to the shortest path, to indicate the second network device to send the packet based on the shortest path.

Optionally, the obtaining module 1701 is configured to: receive the packet through a second interface corresponding to the non-shortest path, and determine the non-shortest path for sending the packet.

Optionally, the first network device sends the packet to the second network device via a third network device, where the third network device and the first network device belong to a same group, and the third network device is on the non-shortest path.

Optionally, the network device further includes a receiving module, configured to: receive a route advertisement message sent by the second network device, where the route advertisement message includes an address of a destination device of the packet, a path cost value from the first network device to the destination device via the second network device, and a next-hop address for sending the packet by the first network device to the destination device; and determine, based on the path cost value, that a path from the first network device to the destination device is the non-shortest path.

Optionally, the network device is applied to a dragonfly network or a dragonfly+ network.

For a detailed process of sending the packet by the network device shown in FIG. 17, refer to the descriptions of the content in the foregoing embodiments. Details are not described herein again.

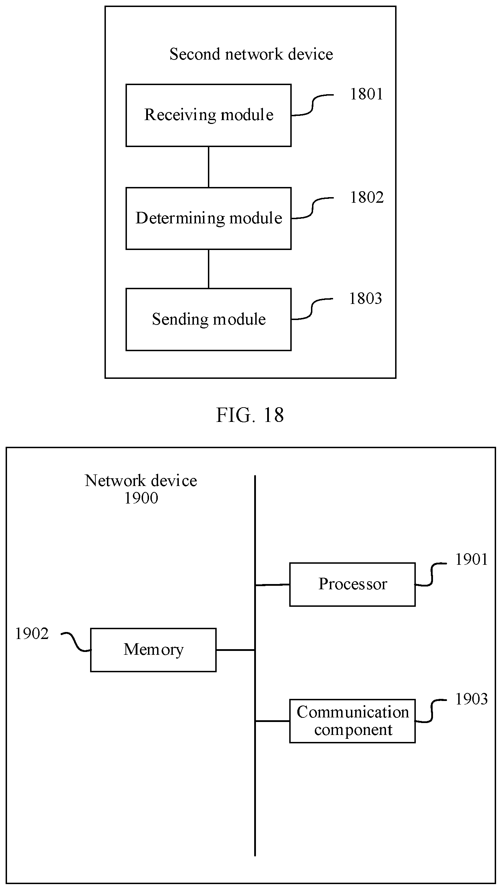

FIG. 18 shows a network device according to an embodiment of this application. The network device may be the second network device in the foregoing embodiments, and may be configured to implement the packet sending method in the foregoing embodiments. Refer to FIG. 18. The network device includes:
a receiving module 1801, configured to receive a packet sent by a first network device based on a non-shortest path; and specifically, receiving functions in the foregoing steps 503, 1601, and other implicit steps may be implemented;
a determining module 1802, configured to determine to send the packet based on a notification of the first network device and a shortest path, where the non-shortest path includes at least two inter-group paths, the second network device and the first network device belong to different groups, the non-shortest path includes the shortest path, and the shortest path includes one inter-group path; and specifically, receiving functions in the foregoing steps 503, 1602, and other implicit steps may be implemented; and
a sending module 1803, configured to send the packet based on the notification and the shortest path; and specifically, receiving functions in the foregoing steps 503, 1603, and other implicit steps may be implemented.

Optionally, the determining module 1803 is configured to determine, based on shortest path information set in the packet, to send the packet based on the shortest path, where the shortest path information indicates the second network device to send the packet based on the shortest path.

Optionally, the determining module 1803 is configured to: receive, through a first interface corresponding to the shortest path, the packet sent by the first network device, and determine to send the packet based on the shortest path.

Optionally, the determining module 1803 is configured to determine, based on a notification that is sent by a third network device and that is about sending the packet based on the shortest path, to send the packet based on the shortest path, where the third network device and the first network device belong to a same group, and the third network device is on the non-shortest path.

Optionally, the receiving module 1801 is further configured to: receive a route advertisement message sent by a fourth network device, where the route advertisement message includes an address of a destination device of the packet, a path cost value from the second network device to the destination device via the fourth network device, and a next-hop address for sending the packet by the second network device to the destination device; and determine, based on the path cost value, that a path from the second network device to the destination device is the shortest path.

Optionally, the network device is applied to a dragonfly network or a dragonfly+ network.

For a detailed process of sending the packet by the network device shown in FIG. 18, refer to the descriptions of the content in the foregoing embodiments. Details are not described herein again. In addition, module division manners in FIG. 17 and FIG. 18 are examples of division manners. This is not limited in this embodiment of this application.

FIG. 19 is a schematic diagram of a structure of a network device according to an embodiment of this application. The network device 1900 may be any network device in the foregoing embodiments, for example, may be the first network device, the second network device, or the third network device in the foregoing embodiments. The network device 1900 may be used for implementing the packet sending method in the foregoing embodiments, and optionally, may further implement the route establishment method in the foregoing embodiments. In terms of hardware composition, the structure of the network device 1900 may be shown in FIG. 19, and includes a processor 1901, a memory 1902, and a communication component 303.

The processor 1901 may be a central processing unit (central processing unit, CPU), a system on chip (system on chip, SoC), or the like. The processor 1901 may be configured to determine a path for sending a packet, including a shortest path, a non-shortest path, and the like for sending the packet. The memory 1902 may include various volatile memories or non-volatile memories, for example, a solid state disk (solid state disk, SSD) or a dynamic random access memory (dynamic random access memory, DRAM). The memory 1902 may be configured to store a routing table, including a shortest-path routing table, a non-shortest-path routing table, and the like. The communication component 1903 may be a wired network connector, a wireless fidelity (wireless fidelity, Wi-Fi) module, a Bluetooth module, a honeycomb network communication module, or the like. In this embodiment of this application, the communication component 1903 is generally the wired network connector. The communication component 1903 may be configured to perform data transmission with another network device, a host, or the like. For example, an interface of the communication component 1903 may receive a packet sent by the host, and another interface may forward the packet to a next-hop device.

An embodiment of this application further provides a packet sending system. The system includes a first network device and a second network device. The first network device and the second network device may be configured to implement the packet sending method in the foregoing embodiments. Optionally, the first network device and the second network device may further implement the route establishment method in the foregoing embodiments. The first network device and the second network device may be the network device 1900 shown in FIG. 19.

An embodiment of this application provides a computer program product. The computer program product includes computer instructions, and the computer instructions are stored in a computer-readable storage medium. A processor of a network device reads the computer instructions from the computer-readable storage medium, and the processor executes the computer instructions, to enable the network device to perform the foregoing packet sending method and the foregoing route establishment method.

All or some of the foregoing embodiments may be implemented by using software, hardware, firmware, or any combination thereof. When the software is used for implementation, all or some of the embodiments may be implemented in a form of a computer program product. The computer program product includes one or more computer instructions. When the computer program instructions are loaded and executed on a device, all or some of the processes or functions according to embodiments of this application are generated. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial optical cable, an optical fiber, or a digital subscriber line) or wireless (for example, infrared, radio, or microwave) manner. The computer-readable storage medium may be any usable medium accessible by a device, or a data storage device, such as a server or a data center, integrating one or more usable media. The usable medium may be a magnetic medium (for example, a floppy disk, a hard disk, or a magnetic tape), an optical medium (for example, a digital video disk (digital video disk, DVD)), a semiconductor medium (for example, a solid state drive).

A person of ordinary skill in the art may understand that all or some of the steps of the foregoing embodiments may be implemented by hardware or a program instructing related hardware. The program may be stored in a computer-readable storage medium. The storage medium may be a read-only memory, a magnetic disk, an optical disc, or the like.

In this application, terms such as "first" and "second" are used to distinguish between same items or similar items that have basically same purposes or functions. It should be understood that there is no logical or time sequence dependency between "first" and "second", and a quantity and an execution sequence are not limited. It should also be understood that although the terms such as first and second are used in the following description to describe various elements, these elements should not be limited by the terms. These terms are merely intended to distinguish one element from another. For example, without departing from the scope of various examples, a first network device may be referred to as a second network device, and similarly, a second network device may be referred to as a first network device. Both the first network device and the second network device may be network devices, and in some cases, may be separate and different network devices. In this application, a term "at least one" means one or more, and a term "a plurality of" in this application means two or more.

The foregoing descriptions are merely specific implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. A packet sending method, wherein the method comprises:
obtaining, by a first network device, a non-shortest path for sending a packet, wherein the non-shortest path comprises at least two inter-group paths, and a second network device and the first network device on the non-shortest path belong to different groups; and
sending, by the first network device, the packet to the second network device, and notifying the second network device to send the packet based on a shortest path, wherein the non-shortest path comprises the shortest path, and the shortest path comprises one inter-group path.

2. The method according to claim 1, wherein the sending, by the first network device, the packet to the second network device, and notifying the second network device to send the packet based on a shortest path comprises:
setting, by the first network device, shortest path information in the packet, wherein the shortest path information indicates the second network device to send, based on the shortest path, the packet in which the shortest path information is set; and
sending, by the first network device to the second network device, the packet in which the shortest path information is set.

3. The method according to claim 2, wherein the obtaining, by a first network device, a non-shortest path for sending a packet comprises:
obtaining, by the first network device based on non-shortest path information set in the packet, the non-shortest path for sending the packet.

4. The method according to claim 1, wherein the sending, by the first network device, the packet to the second network device, and notifying the second network device to send the packet based on a shortest path comprises:
sending, by the first network device, the packet to the second network device through a first interface corresponding to the shortest path, to indicate the second network device to send the packet based on the shortest path.

5. The method according to claim 4, wherein the obtaining, by a first network device, a non-shortest path for sending a packet comprises:
receiving, by the first network device, the packet through a second interface corresponding to the non-shortest path, and determining the non-shortest path for sending the packet.

6. The method according to any one of claims 1 to 5, wherein the second network device is a next-hop device of the first network device on the non-shortest path.

7. The method according to any one of claims 1 to 6, wherein the first network device sends the packet to the second network device via a third network device, the third network device and the first network device belong to a same group, and the third network device is on the non-shortest path.

8. The method according to any one of claims 1 to 7, wherein before the obtaining, by a first network device, a non-shortest path for sending a packet, the method further comprises:
receiving, by the first network device, a route advertisement message sent by the second network device, wherein the route advertisement message comprises an address of a destination device of the packet, a path cost value from the first network device to the destination device via the second network device, and a next-hop address for sending the packet by the first network device to the destination device; and
determining, by the first network device based on the path cost value, that a path from the first network device to the destination device is the non-shortest path.

9. The method according to any one of claims 1 to 8, wherein a path cost value of the inter-group path is greater than a sum of path cost values of all intra-group paths in a same group.

10. The method according to any one of claims 1 to 9, wherein the shortest path information is set in an internet protocol IP header or a tunnel header in the packet.

11. The method according to any one of claims 1 to 10, wherein the method is applied to a dragonfly dragonfly network or a dragonfly+ dragonfly+ network.

12. A packet sending method, wherein the method comprises:
receiving, by a second network device, a packet sent by a first network device based on a non-shortest path;
determining, by the second network device based on a notification of the first network device, to send the packet based on a shortest path, wherein the non-shortest path comprises at least two inter-group paths, the second network device and the first network device belong to different groups, the non-shortest path comprises the shortest path, and the shortest path comprises one inter-group path; and
sending, by the second network device, the packet based on the notification and the shortest path.

13. The method according to claim 12, wherein the determining, by the second network device based on a notification of the first network device, to send the packet based on a shortest path comprises:
determining, by the second network device based on shortest path information set in the packet, to send the packet based on the shortest path, wherein the shortest path information indicates the second network device to send the packet based on the shortest path.

14. The method according to claim 12, wherein the determining, by the second network device based on a notification of the first network device, to send the packet based on a shortest path comprises:
receiving, by the second network device through a first interface corresponding to the shortest path, the packet sent by the first network device, and determining to send the packet based on the shortest path.

15. The method according to any one of claims 12 to 14, wherein the second network device is a next-hop device of the first network device on the non-shortest path.

16. The method according to any one of claims 12 to 15, wherein the determining, by the second network device based on a notification of the first network device, to send the packet based on a shortest path comprises: determining, by the second network device based on a notification that is sent by a third network device and that is about sending the packet based on the shortest path, to send the packet based on the shortest path, wherein the third network device and the first network device belong to a same group, and the third network device is on the non-shortest path.

17. The method according to any one of claims 12 to 16, wherein before the receiving, by a second network device, a packet sent by a first network device based on a non-shortest path, the method further comprises:
receiving, by the second network device, a route advertisement message sent by a fourth network device, wherein the route advertisement message comprises an address of a destination device of the packet, a path cost value from the second network device to the destination device via the fourth network device, and a next-hop address for sending the packet by the second network device to the destination device; and
determining, by the second network device based on the path cost value, that a path from the second network device to the destination device is the shortest path.

18. The method according to any one of claims 12 to 17, wherein a path cost value of the inter-group path is greater than a sum of path cost values of all intra-group paths in a same group.

19. The method according to any one of claims 12 to 18, wherein the shortest path information is set in an internet protocol IP header or a tunnel header in the packet.

20. The method according to any one of claims 12 to 19, wherein the method is applied to a dragonfly dragonfly network or a dragonfly+ dragonfly+ network.

21. A first network device, wherein the first network device comprises:
an obtaining module, configured to obtain a non-shortest path for sending a packet, wherein the non-shortest path comprises at least two inter-group paths, and a second network device and the first network device on the non-shortest path belong to different groups; and
a sending module, configured to: send the packet to the second network device, and notify the second network device to send the packet based on a shortest path, wherein the non-shortest path comprises the shortest path, and the shortest path comprises one inter-group path.

22. The first network device according to claim 21, wherein the sending module is configured to:
set shortest path information in the packet, wherein the shortest path information indicates the second network device to send, based on the shortest path, the packet in which the shortest path information is set; and
send, to the second network device, the packet in which the shortest path information is set.

23. The first network device according to claim 22, wherein the obtaining module is configured to:
obtain, based on non-shortest path information set in the packet, the non-shortest path for sending the packet.

24. The first network device according to claim 21, wherein the sending module is configured to:
send the packet to the second network device through a first interface corresponding to the shortest path, to indicate the second network device to send the packet based on the shortest path.

25. The first network device according to claim 24, wherein the obtaining module is configured to:
receive the packet through a second interface corresponding to the non-shortest path, and determine the non-shortest path for sending the packet.

26. The first network device according to any one of claims 21 to 25, wherein the first network device sends the packet to the second network device via a third network device, the third network device and the first network device belong to a same group, and the third network device is on the non-shortest path.

27. The first network device according to any one of claims 21 to 26, wherein the first network device further comprises a receiving module, configured to:
receive a route advertisement message sent by the second network device, wherein the route advertisement message comprises an address of a destination device of the packet, a path cost value from the first network device to the destination device via the second network device, and a next-hop address for sending the packet by the first network device to the destination device; and
determine, based on the path cost value, that a path from the first network device to the destination device is the non-shortest path.

28. The first network device according to any one of claims 21 to 27, wherein the first network device is applied to a dragonfly dragonfly network or a dragonfly+ dragonfly+ network.

29. A second network device, wherein the second network device comprises:
a receiving module, configured to receive a packet sent by a first network device based on a non-shortest path;
a determining module, configured to determine, based on a notification of the first network device, to send the packet based on a shortest path, wherein the non-shortest path comprises at least two inter-group paths, the second network device and the first network device belong to different groups, the non-shortest path comprises the shortest path, and the shortest path comprises one inter-group path; and
a sending module, configured to send the packet based on the notification and the shortest path.

30. The second network device according to claim 29, wherein the determining module is configured to:
determine, based on shortest path information set in the packet, to send the packet based on the shortest path, wherein the shortest path information indicates the second network device to send the packet based on the shortest path.

31. The second network device according to claim 29, wherein the determining module is configured to:
receive, through a first interface corresponding to the shortest path, the packet sent by the first network device, and determine to send the packet based on the shortest path.

32. The second network device according to any one of claims 29 to 31, wherein the determining module is configured to:
determine, based on a notification that is sent by a third network device and that is about sending the packet based on the shortest path, to send the packet based on the shortest path, wherein the third network device and the first network device belong to a same group, and the third network device is on the non-shortest path.

33. The second network device according to any one of claims 29 to 32, wherein the receiving module is further configured to:
receive a route advertisement message sent by a fourth network device, wherein the route advertisement message comprises an address of a destination device of the packet, a path cost value from the second network device to the destination device via the fourth network device, and a next-hop address for sending the packet by the second network device to the destination device; and
determine, based on the path cost value, that a path from the second network device to the destination device is the shortest path.

34. The second network device according to any one of claims 29 to 33, wherein the second network device is applied to a dragonfly dragonfly network or a dragonfly+ dragonfly+ network.

35. A network device, wherein the network device comprises a memory and a processor, the memory is configured to store computer instructions, and the processor is configured to execute the computer instructions stored in the memory, to enable the network device to perform the method according to any one of claims 1 to 20.

36. A communication system, wherein the communication system comprises a first network device and a second network device, wherein
the first network device is configured to perform the method according to any one of claims 1 to 11; and
the second network device is configured to perform the method according to any one of claims 12 to 20.

37. A readable storage medium, wherein the readable storage medium stores program code, and when the program code is executed by a network device, the network device performs the method according to any one of claims 1 to 20.
